# EUROPEAN PATENT APPLICATION

(11) **EP 4 836 337 A1**
(43) Date of publication of application: **04.11.2026**
(21) Application number: 23962893.6
(22) Date of filing: 29.12.2023
(51) Int. Cl.: H04L 5/00, H04W 72/50

(54) **SIGNAL TRANSMISSION METHODS AND APPARATUSES, AND DEVICES, STORAGE MEDIUM AND CHIP**

(71) Applicant: GUANGDONG OPPO MOBILE TELECOMMUNICATIONS CORP., LTD., Dongguan, Guangdong 523860 (CN)
(72) Inventor: ZHANG, Jinyu, Dongguan, Guangdong 523860 (CN); XU, Weijie, Dongguan, Guangdong 523860 (CN); CUI, Shengjiang, Dongguan, Guangdong 523860 (CN)
(74) Representative: Mewburn Ellis LLP
(86) International application number: PCT/CN2023/143565
(87) International publication number: WO 2025/138219

(57) **Abstract**

A method and apparatus for signal transmission, a device, a storage medium, and a chip are provided, which relate to the field of mobile communication technologies. The method is performed by a zero-power device, and the method includes the following. (S610) A first resource obtained. (S620) A positioning reference signal (PRS) is transmitted through active transmission according to the first resource, where the PRS is used by a positioning device that receives the PRS to perform positioning-related measurement and obtain corresponding information. With such a solution, respective resources used by multiple zero-power devices to transmit respective PRSs can be determined for the multiple zero-power devices, thereby effectively avoiding interference caused by the multiple zero-power devices transmitting the respective PRSs on the same resource, and thus further improving reception measurement and positioning accuracy of the positioning device.

## Description

### TECHNICAL FIELD

This disclosure relates to the field of mobile communication technologies, in particular to a method and apparatus for signal transmission, a device, a storage medium, and a chip.

### BACKGROUND

With the continuous development of mobile communication technologies, demands for positioning based on mobile communication are also increasing.

In the related art, zero-power devices, due to their characteristics such as battery-free, maintenance-free, and low cost, are very suitable for large-scale deployment and some scenarios with special requirements. However, current positioning solutions are not entirely applicable to zero-power systems.

### SUMMARY

A method and apparatus for signal transmission, a device, a storage medium, and a chip are provided in embodiments of the disclosure. Technical solutions are as follows.

In an aspect, a method for signal transmission is provided in embodiments of the disclosure. The method is performed by a zero-power device, and the method includes the following. A first resource obtained. A positioning reference signal (PRS) is transmitted through active transmission according to the first resource, where the PRS is used by a positioning device that receives the PRS to perform positioning-related measurement and obtain corresponding information.

In an aspect, a method for signal transmission is provided in embodiments of the disclosure. The method is performed by a positioning device, and the method includes the following. A PRS is received, where the PRS is a signal transmitted by a zero-power device through active transmission according to a first resource. Positioning-related measurement is performed and corresponding information is obtained according to the PRS.

In another aspect, an apparatus for signal transmission is provided in embodiments of the disclosure. The apparatus includes an obtaining module and a transmitting module. The obtaining module is configured to obtain a first resource. The transmitting module is configured to transmit a PRS through active transmission according to the first resource, where the PRS is used by a positioning device that receives the PRS to perform positioning-related measurement and obtain corresponding information.

In another aspect, an apparatus for signal transmission is provided in embodiments of the disclosure. The apparatus includes a receiving module and a positioning module. The receiving module is configured to receive a PRS, where the PRS is a signal transmitted by a zero-power device through active transmission according to a first resource. The positioning module is configured to perform positioning-related measurement and obtain corresponding information according to the PRS.

In another aspect, a positioning device is provided in embodiments of the disclosure. The positioning device includes a processor, a memory, and a transceiver. The memory is configured to store a computer program. The processor is configured to execute the computer program, to cause the terminal device to implement the method for signal transmission performed by the positioning device.

In another aspect, a zero-power tag device is provided in embodiments of the disclosure. The zero-power tag device includes a processor, a memory, and a transceiver. The memory is configured to store a computer program. The processor is configured to execute the computer program, to cause the zero-power tag device to implement the method for signal transmission performed by the zero-power tag device.

In yet another aspect, a computer-readable storage medium is provided in embodiments of the disclosure. The computer-readable storage medium is configured to store a computer program that is loaded and executed by a processor, to implement the method for signal transmission.

In yet another aspect, a chip is further provided in the disclosure. The chip is configured to execute in a communication device, to cause the communication device to perform the method for signal transmission.

In yet another aspect, a computer program product is provided in the disclosure. The computer program product includes computer instructions stored in a computer-readable storage medium. A processor of a communication device is configured to read the computer instructions from the computer-readable storage medium and execute the computer instructions, to cause the communication device to perform the method for signal transmission.

In yet another aspect, a computer program is provided in the disclosure. The computer program is executed by a processor of a communication device, to implement the method for signal transmission.

In embodiments of the disclosure, a solution for signal transmission is provided. A zero-power device transmits a PRS to a positioning device through active transmission according to an obtained first resource. Correspondingly, the positioning device receives the PRS, and then performs positioning-related measurement and obtains corresponding information according to the received PRS. With such a solution, a resource(s) occupied by the zero-power device to transmit the PRS to the positioning device can be determined, thereby effectively avoiding interference caused by multiple zero-power devices transmitting respective PRSs on the same resource, and thus further improving reception measurement and positioning accuracy of the positioning device.

### BRIEF DESCRIPTION OF THE DRAWINGS

FIG. 1 is a schematic diagram illustrating a communication system provided in an exemplary embodiment of the disclosure.
FIG. 2 is a schematic diagram illustrating zero-power communication provided in an exemplary embodiment of the disclosure.
FIG. 3 is a schematic diagram illustrating backscatter communication provided in an exemplary embodiment of the disclosure.
FIG. 4 is a schematic circuit diagram illustrating resistance-based load modulation provided in an exemplary embodiment of the disclosure.
FIG. 5 is a schematic diagram illustrating a positioning solution provided in an exemplary embodiment of the disclosure.
FIG. 6 is a flowchart of a method for signal transmission provided in an exemplary embodiment of the disclosure.
FIG. 7 is a flowchart of a method for signal transmission provided in an exemplary embodiment of the disclosure.
FIG. 8 is a flowchart of a method for signal transmission provided in an exemplary embodiment of the disclosure.
FIG. 9 is a schematic diagram illustrating positioning provided in an exemplary embodiment of the disclosure.
FIG. 10 is a flowchart of a method for signal transmission provided in an embodiment of the disclosure.
FIG. 11 is a schematic diagram illustrating configuration information provided in an exemplary embodiment of the disclosure.
FIG. 12 is a schematic diagram illustrating configuration information provided in an exemplary embodiment of the disclosure.
FIG. 13 is a flowchart of a method for signal transmission provided in an exemplary embodiment of the disclosure.
FIG. 14 is a flowchart of a method for signal transmission provided in an exemplary embodiment of the disclosure.
FIG. 15 is a block diagram of an apparatus for signal transmission provided in an exemplary embodiment of the disclosure.
FIG. 16 is a block diagram of an apparatus for signal transmission provided in an exemplary embodiment of the disclosure.
FIG. 17 is a schematic structural diagram of a communication device provided in an exemplary embodiment of the disclosure.

### DETAILED DESCRIPTION

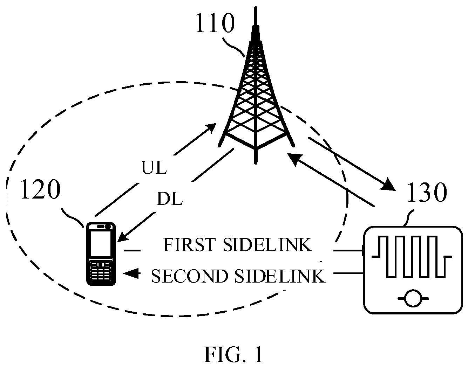

FIG. 1 illustrates a schematic diagram of a communication system provided in an exemplary embodiment of the disclosure. The communication system includes a network device 110, a terminal device 120, and a zero-power tag device 130, which is not limited in the disclosure.

The network device 110 in the disclosure provides wireless communication functions. The network device 110 includes but not limited to: an evolved node B (eNB), a radio network controller (RNC), a node B (NB), a base station controller (BSC), a base transceiver station (BTS), a home base station (e.g., a home evolved node B, or a home node B (HNB)), a baseband unit (BBU), an access point (AP) in a wireless fidelity (Wi-Fi) system, a wireless relay node, a wireless backhaul node, a transmission point (TP), a transmission and reception point (TRP), etc. It may also be a next generation node B (gNB) or a transmission point (a TRP or a TP) in a 5th generation (5G) mobile communication system, or an antenna panel or a set of antenna panels( including multiple antenna panels) of a base station in the 5G system, or a network node constituting a gNB or a transmission point, such as a baseband unit (BBU) or a distributed unit (DU), etc., or a base station in a beyond 5th generation (B5G) mobile communication system, a 6th generation (6G) mobile communication system, etc., or a core network (CN), a fronthaul, a backhaul, a radio access network (RAN), a network slice, etc., or a serving cell, a primary cell (PCell), a primary secondary cell (PSCell), a special Cell (SpCell), a secondary cell (SCell), a neighboring cell, etc., of a terminal device.

The terminal device 120 in the disclosure, also known as a user equipment (UE), an access terminal, a user unit, a user station, a mobile station, a mobile platform, a remote station, a remote terminal, a mobile device, a user terminal, a terminal, a wireless communication device, a user agent, a user apparatus. The terminal includes but is not limited to: a handheld device, a wearable device, an in-vehicle device, an Internet of things (IoT) device, etc., such as: a mobile phone, a tablet, an e-book reader, a laptop, a desktop computer, a television, a game console, a mobile Internet device (MID), an augmented reality (AR) terminal, a virtual reality (VR) terminal, and a mixed reality (MR) terminal, a wearable device, a handle, an electronic tag, a controller, a wireless terminal in industrial control, a wireless terminal in self-driving, a wireless terminal in remote medical, a wireless terminal in smart grid, a wireless terminal in transportation safety, a wireless terminal in smart city, a wireless terminal (e.g., smart TVs, routers, smart speakers, etc.) in smart home, a wireless terminal in remote medical surgery, a cellular phone, a cordless phone, a session initiation protocol (SIP) phone, a wireless local loop (WLL) station, a personal digital assistant (PDA), a set top box (STB), a customer premise equipment (CPE), etc.

The network device 110 and the terminal device 120 communicate with each other using a certain air interface technology, such as a Uu interface.

Exemplarily, there are two communication scenarios between the network device 110 and the terminal device 120: an uplink (UL) communication scenario and a downlink (DL) communication scenario. The UL communication refers to sending signals to the network device 110. The DL communication refers to sending signals to the terminal device 120.

The terminal device 120 and other terminal devices can communicate with one another using a certain air interface technology, such as a PC5 interface.

In some embodiments, there are two communication scenarios between the terminal device 120 and other terminal devices: a first sidelink communication scenario and a second sidelink communication scenario. The first sidelink communication refers to sending signals to other terminal devices. The second sidelink communication refers to sending signals to the terminal device 120.

Both the terminal device 120 and other terminal devices are within a network coverage and located in the same cell, or both the terminal device 120 and other terminal devices are within the network coverage but located in different cells, or the terminal device 120 is within the network coverage and other terminal devices are outside the network coverage.

The zero-power tag device 130 is a radio frequency identification (RFID)-based zero-power device. A zero-power device refers to a device that utilizes various ambient energies, such as radio frequency (RF), light energy, solar energy, thermal energy, mechanical energy, etc. Such a device may have no energy storage capability, or may have very limited energy storage capability (such as use of a capacitor with a capacity of tens of microfarads (µF)).

In some embodiments, the zero-power device can also be referred to as an ambient power-enabled IoT (AMP IoT), or ambient IoT for short. An AMP IoT device and the network device 110 can directly communicate with each other.

The technical solutions provided in embodiments of the disclosure may be applied to various communication systems, such as: a global system of mobile communication (GSM) system, a code division multiple access (CDMA) system, a wideband code division multiple access (WCDMA) system, a general packet radio service (GPRS) system, a long term evolution (LTE) system, a LTE frequency division duplex (FDD) system, an LTE time division duplex (TDD) system, an advanced long term evolution (LTE-A) system, a universal mobile telecommunication system (UMTS), a worldwide interoperability for microwave access (WiMAX) communication system, a 5G mobile communication system, a new radio (NR) system, an evolved system of the NR system, an LTE-based access to unlicensed spectrum (LTE-U) system, an NR-based access to unlicensed spectrum (NR-U) system, a terrestrial network (TN) system, a non-terrestrial network (NTN) system, a wireless local area network (WLAN) system, a Wi-Fi system, a cellular IoT system, a cellular passive loT system, and may also be applied to subsequent evolution systems of a 5G NR system, and may also be applied to B5G, 6G, and subsequent evolution systems. In some embodiments of the disclosure, "NR" may also be referred to as a 5G NR system or a 5G system. Among them, the 5G mobile communication system may include non-standalone (NSA) and/or standalone (SA).

The technical solutions provided in embodiments of the disclosure may also be applied to a machine type communication (MTC), a long term evolution-machine (LTE-M), a device-to-device (D2D) network, a machine-to-machine (M2M) network, an IoT network, or other networks. The IoT network may include, for example, an Internet of vehicles. The communication methods in the Internet of vehicles system are collectively referred to as vehicle to X (V2X, X may represent anything). For example, the V2X may include: vehicle-to-vehicle (V2V) communication, vehicle-to-infrastructure (V2I) communication, vehicle-to-pedestrian (V2P) communication, vehicle-to-network (V2N) communication, etc.

### I. Communication based on zero-power devices

In recent years, the application of zero-power devices has become increasingly widespread. A typical zero-power device is an RFID tag, which is a technology that utilizes spatial coupling of wireless RF signals to achieve a contactless automatic transmission and recognition of tag information. The RFID tag is also referred to as "RF tag" or "electronic tag". The types of electronic tags are classified based on different power-supply modes into an active electronic tag, a passive electronic tag, and a semi-passive electronic tag.

The active electronic tag refers to the energy for the operation of the electronic tag being provided by a battery. The battery, a memory, and an antenna(s) form the active electronic tag together. Different from an activation manner of passive radio frequency, the active electronic tag continuously transmits information through a set frequency band before the battery is replaced. The passive electronic tag, also referred to as "inactive electronic tag", does not support a built-in battery. When the passive electronic tag approaches a reader, the tag is in the near field range formed by the radiation of an antenna(s) of the reader, an antenna(s) of the electronic tag generates an induced current through electromagnetic induction, and the induced current drives a chip circuit of the electronic tag. The chip circuit transmits the identification information stored in the tag to the reader through the antenna(s) of the electronic tag. A semi-active electronic tag inherits the advantages of small size, light weight, low price, and long service life of the passive electronic tag. When there is no reader access, the built-in battery only provides power for a few circuits in the chip, and only when there is reader access, the built-in battery powers the RFID chip, so as to increase the reading and writing distance of the tag and improve the reliability of communication.

RFID is a wireless communication technology. A basic RFID system is composed of an electronic tag and a reader/writer. The electronic tag includes coupling components and chips. Each electronic tag has a unique electronic code and is placed on a measured target to mark the target object. The reader/writer can not only read information on the electronic tag, but also write the information on the electronic tag, and provide the energy needed for the electronic tag to communicate at the same time.

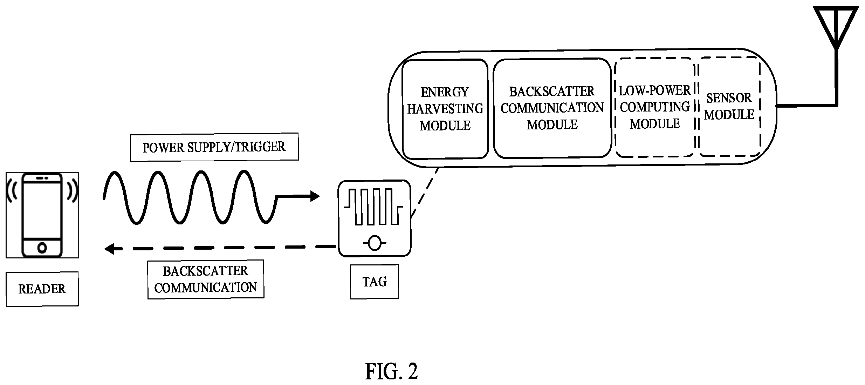

FIG. 2 is a schematic diagram illustrating zero-power communication provided in an exemplary embodiment of the disclosure. As illustrated in FIG. 2, after entering an electromagnetic field, an electronic tag receives an RF signal transmitted by a reader/writer. A passive electronic tag transmits information stored in the electronic tag by using energy obtained from an electromagnetic field generated in space, and the reader/writer reads and decodes the information to identify the electronic tag.

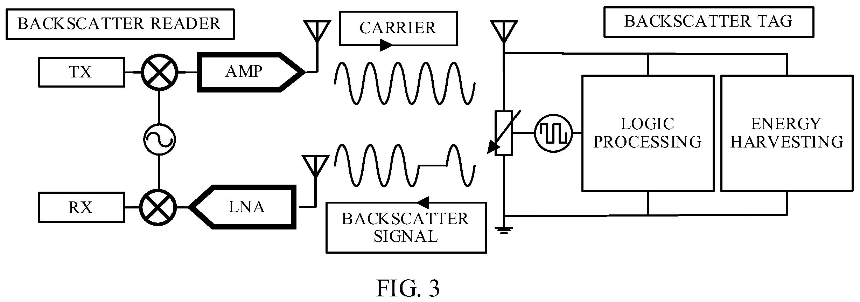

One of the key technologies of the zero-power communication system is backscatter communication. FIG. 3 is a schematic diagram illustrating backscatter communication provided in an exemplary embodiment of the disclosure. As illustrated in FIG. 3, a zero-power device (a backscatter tag in FIG. 3) receives a carrier signal transmitted by a backscatter reader/writer, and harvests energy by using an RF energy harvesting module. Further, the zero-power device provides energy for a low-power processing module (a logic processing module in FIG. 3), modulates an incoming wave signal, and performs backscattering. Main characteristics of backscatter communication are as follows.
1) The terminal does not actively transmit a signal, but implements backscatter communication by modulating an incoming wave signal.
2) The terminal does not rely on a conventional active power amplification transmitter, but uses a low-power calculation unit, which greatly reduces hardware complexity.
3) Battery-free communication can be implemented by energy harvesting.

When the zero-power device performs backscatter communication, a frequency of a backscatter signal may be the same as a frequency of an incoming wave signal or may have a frequency offset. In the case of the frequency offset, offsets of all zero-power devices may be the same or different. When the zero-power device performs backscatter communication, a backscatter signal may be triggered immediately after the incoming wave signal is received, or may be triggered after a specific time offset. In the case of the time offset, offsets of all zero-power devices may be the same or different.

When a zero-power device performs backscatter communication, spatial characteristics of a backscatter signal may be set as needed. For example, an antenna array may be configured to achieve a larger antenna gain in a certain direction and a smaller gain in other directions, thereby concentrating a signal power in a certain spatial direction. When a zero-power device performs backscatter communication, the zero-power device may also perform information modulation, which is referred to as "load modulation". Load modulation is a mode often used by an electronic tag to transmit data to a reader/writer. The load modulation completes the modulation process by adjusting electrical parameters of the electronic tag oscillation circuit according to the rhythm of the data stream, so as to make the size and phase of impedance of the electronic tag change accordingly. The load modulation technology mainly includes resistance-based load modulation and capacitor-based load modulation.

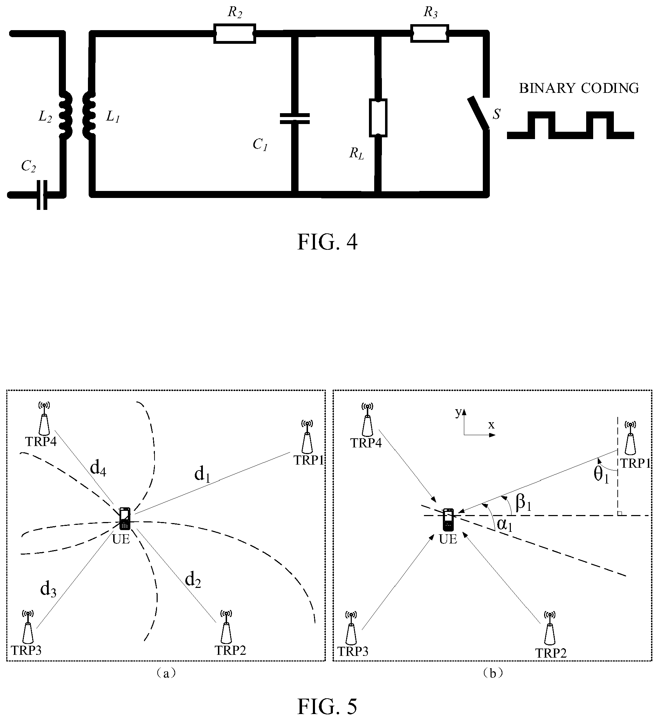

In resistance-based load modulation, a load is connected in parallel with a resistor, referred to as a load modulation resistor, which is turned on and off based on a clock of the data stream, and the turn-on and turn-off of a switch S is controlled by binary data encoding. FIG. 4 is a schematic circuit diagram illustrating resistance-based load modulation provided in an exemplary embodiment of the disclosure. As illustrated in FIG. 4, in capacitor-based load modulation, the load is connected in parallel with a capacitor, replacing the load modulation resistor controlled by the binary data encoding in FIG. 4.

### II. Classification of zero-power devices

1) Based on the energy source and usage of the zero-power device, the zero-power device can be divided into the following types.

### ① Passive zero-power device

For a zero-power device, a built-in battery is not needed. When a zero-power device moves close to a network device (e.g., a reader/writer in an RFID system), the zero-power device is within a near-field of the radiation of an antenna(s) of the network device.

Therefore, an antenna(s) of the zero-power device generates an induced current through electromagnetic induction, and the induced current drives a low-power chip circuit of the zero-power device to perform demodulation of a forward-link (downlink, a link from the network device to the zero-power device) signal and modulation of a backward-link (uplink, a link from the zero-power device to the network device, also referred to as "backscatter-link") signal. For the backscatter link, the zero-power device performs signal transmission through backscattering.

Neither the forward link nor the backward link of the passive zero-power device requires a built-in battery to drive, which is a truly zero-power device.

The passive zero-power device does not need a battery and has a simple RF circuit and a simple baseband circuit. For example, the passive zero-power device does not need components such as an LNA, a power amplifier (PA), a crystal oscillator, an analog-to-digital converter (ADC), etc., and thus has advantages such as small size, light weight, low price, and long service life.

### ② Semi-passive zero-power device

A semi-passive zero-power device is not equipped with a conventional battery, but can use an RF energy harvesting module to harvest radio wave energy or use a solar energy/light energy/thermal energy/kinetic energy harvesting module to harvest energy, and store the harvested energy in a power storage unit (e.g., a capacitor). After the power storage unit obtains energy, a low-power chip circuit of the zero-power device can be driven to perform demodulation of a forward-link signal and modulation of a backward-link signal. For a backscatter link, the zero-power device performs signal transmission through backscattering.

Neither the forward link nor the backward link of the semi-passive zero-power device requires a built-in battery to drive. Although the semi-passive zero-power device utilizes energy stored in the capacitor during operation, since the energy comes from radio wave energy harvested by the energy harvesting module, the semi-passive zero-power device is truly a zero-power device.

The semi-passive zero-power device inherits many advantages of the passive zero-power device, and thus has advantages such as small size, light weight, low price, long service life, etc.

### ③ Active zero-power device

A zero-power device applied in some scenarios can also be an active zero-power device, and such a device can have a built-in battery (a conventional battery, such as a dry battery, a rechargeable lithium battery, etc.). The battery is used to drive a low-power chip circuit of the zero-power device to perform demodulation of a forward-link signal and modulation of a backward-link signal. However, for a backscatter link, the zero-power device performs signal transmission through backscattering.

Therefore, the zero-power consumption of such a device mainly lies in that signal transmission on the backward link does not require power from the terminal itself but is based on backscattering. Although the active zero-power device uses a battery, the active zero-power device has an extremely low power consumption due to the adoption of an ultra-low power communication technology. As a result, the service life of the battery can be greatly prolonged compared to existing technologies.

The built-in battery of the active zero-power device powers an RFID circuit to increase a reading and writing range of a tag, thereby improving the reliability of communication. Therefore, the active zero-power device can be applied in some scenarios with high requirements on communication distance, reading delay, and other aspects.

### 2) classification of zero-power devices based on a transmitter type

As is well known, similar to service types of other IoT, service types of zero-power IoT are mainly uplink services.

### ① Backscatter-based zero-power device

Such a zero-power device performs uplink data transmission through backscattering. The zero-power device does not have an active transmitter for active transmission, but has only a backscattering transmitter.

Therefore, if data transmission is to be performed, the zero-power device needs to be provided with a carrier wave from the network device, and then performs backscattering based on the carrier wave, thereby implementing data transmission.

### ② Active transmitter-based zero-power device

Such a zero-power device performs uplink data transmission by using an active transmitter capable of active transmission. Therefore, when performing data transmission, the zero-power device can transmit data by using the active transmitter of the zero-power device itself without requiring the network device to provide a carrier wave. An active transmitter applicable to the zero-power device can be, for example, an ultra-low-power ASK transmitter, an ultra-low-power FSK transmitter, etc. Based on current achievement, for the case of transmitting a signal of 100 microwatts (µw) by such a transmitter, overall power consumption can be decreased to 400~600 µw.

### ③ Zero-power device having both a backscattering transmitter and an active transmitter

Such a terminal can support both a backscattering transmitter and an active transmitter. The terminal can determine, according to different conditions (such as electric quantity and available ambient power source) or based on scheduling by a network device, which signal transmission scheme is to be applied, that is, whether to use a backscattering transmitter or use an active transmitter to perform signal transmission.

### III. Cellular passive IoT

Cellular IoT is booming, for example, the 3rd generation partnership project (3GPP) has standardized narrow band internet of things (NB-IoT), MTC, reduced capability (RedCap), and other IoT technologies. However, the related art is no longer able to meet the IoT communication requirements in many scenarios. The main examples are as follows.

### 1) Harsh communication environments

In some IoT scenarios, extreme environments such as high temperature, extremely low temperature, high humidity, high pressure, high radiation, or high-speed motion may be encountered. Examples include ultra-high voltage substations, high-speed train tracks, cold regions, industrial production lines, etc. In these scenarios, due to limitations of the operating environment of conventional power supplies, existing IoT terminals cannot operate. Moreover, extreme environments are also unfavorable for IoT maintenance, such as battery replacement.

### 2) Extremely small terminal form requirements

Some IoT communication scenarios, such as food traceability, goods circulation, and smart wearables, require terminals to be extremely small in size for convenient use in such scenarios. For example, IoT terminals used for goods management in circulation are often implemented as electronic tags, which are embedded in product packaging in a very compact form. Another example is lightweight wearable devices, which can improve the user experience while meeting user needs.

### 3) Extremely low-cost IoT communication requirements

Many IoT communication scenarios require a sufficiently low cost of IoT terminals to improve competitiveness compared with other alternative technologies. For example, in logistics or warehousing scenarios, to facilitate the management of a large number of circulating items, IoT terminals can be attached to each item, and communication between the terminal and the logistics network can achieve precise management throughout the entire logistics process and life cycle. These scenarios require the price of the IoT terminals to be sufficiently competitive.

Therefore, to cover these unmet IoT communication needs, the cellular network also needs to develop ultra-low-cost, ultra-small, battery-free/maintenance-free IoT, and the zero-power IoT can precisely meet this demand.

During standardization discussions, the zero-power IoT can also be referred to as ambient power-enabled (AMP) IoT, or ambient IoT for short, and can also be referred to as passive IoT in some technical literature.

An ambient IoT device can refer to an IoT device that powers itself by utilizing various ambient energies, such as RF energy, light energy, solar energy, thermal energy, mechanical energy, etc. The ambient IoT device may have no energy storage capability, or may have very limited energy storage capability (such as use of a capacitor with a capacity of tens of µF). Compared with other IoT apparatus, the ambient IoT device has many advantages, such as conventional battery-free, maintenance-free, small in size, low in complexity, low in cost, a long service life, etc.

Based on 3GPP SA1 discussions on ambient IoT application scenarios, the ambient IoT can be at least used in the following scenarios: object recognition, such as logistics, management of products in a product line, and management of a supply chain; environmental monitoring, such as monitoring of working environment, temperature and humidity of natural environment, and toxic gases; positioning, such as indoor positioning, intelligent object search, and positioning of products in a product line; and intelligent control, such as intelligent control of various electrical appliances (switching on/off of an air conditioner and temperature adjustment) in a smart home, and intelligent control of various facilities (automatic pouring and fertilization) in an agricultural greenhouse.

### IV. Positioning solution

To support various requirements such as public safety services, emergency warning, navigation and item tracking, and asset management, wireless positioning technologies have attracted widespread attention and research, such as multiple methods for determining a resource, based on timing (time difference of arrival (TDOA), and round trip time (RTT)), an angle (an angle of departure (AoD), an angle of arrival (AoA), a horizontal angle of arrival, and a vertical angle of arrival), and a phase, used in systems based on Wi-Fi, Bluetooth, 4G/5G cellular communication, etc.

FIG. 5 is a schematic diagram illustrating a positioning solution provided in an exemplary embodiment of the disclosure.
1) Timing measurement involves calculating a distance between a positioning target and reference nodes by measuring arrival time or a time difference of arrival (TDOA) of reference signals, and then calculating a position of the positioning target according to distances between the positioning target and multiple reference nodes. A typical TDOA method is as illustrated in (a) of FIG. 5. A positioning target can determine corresponding hyperbolas according to TDOAs of signals from multiple reference nodes, and an intersection of the hyperbolas is an estimated position of the positioning target. This is a typical multilateration problem, and there are several classical algorithms, such as a Taylor expansion method, a Chan algorithm, etc. The specific solution algorithm depends on the embodiment of the manufacturer.
2) Angle measurement involves determining an angle of departure/arrival of a signal by using an antenna array, and then calculating a position of a positioning target according to distances between the positioning target and multiple reference nodes. A typical downlink angle of departure (DL-AoD)-based method may be as illustrated in (b) of FIG. 5, in which projections of a distance between a TRP i and a terminal device on an x-axis and a *y*-axis form two perpendicular edges of a right-angled triangle. According to a trigonometric function, a relationship between the edges and DL-AoD *θᵢ* can be expressed as: *xᵢ - x_{UE} =* (*yᵢ - y_{UE}*) × *tanθᵢ*. Since there are multiple TRPs, multiple constraint equations may be obtained, and coordinates (*x_{UE} , y_{UE}*) of the positioning target may be obtained by solving the system of equations.

Accuracy of timing measurement depends on a bandwidth of a reference signal, and a larger bandwidth indicates higher accuracy. Angle measurement depends on arrangement of an antenna array, and a larger quantity of antennas indicates higher angle accuracy. However, an electronic tag has zero-power or ultra-low-power requirements, which may not support sufficient signal bandwidth and antenna configurations. Therefore, it is necessary to research how to implement positioning in a zero-power system, especially in a scenario involving deployment of a large quantity of zero-power tags.

As described above, based on characteristics of zero-power devices, such as being battery-free, maintenance-free, and low-cost, zero-power devices are highly suitable for large-scale deployment and scenarios with special requirements, such as goods in logistics, animals on livestock farms, or critical components in high-temperature and high-pressure environments.

However, a current positioning solution (based on time measurement and angle measurement) requires a relatively large bandwidth and a relatively complex antenna configuration, which is not fully applicable to a zero-power system. In addition, if a large quantity of reference tags transmit backscatter signals on a same resource at a same instant, mutual interference inevitably occurs.

For example, in a case of *M* signal sources and *N* reference tags, there may be a maximum of *M***N* different signals. If there is a lot of interference, computation and measurement at a receiving end may be highly challenged, and final positioning accuracy may be affected.

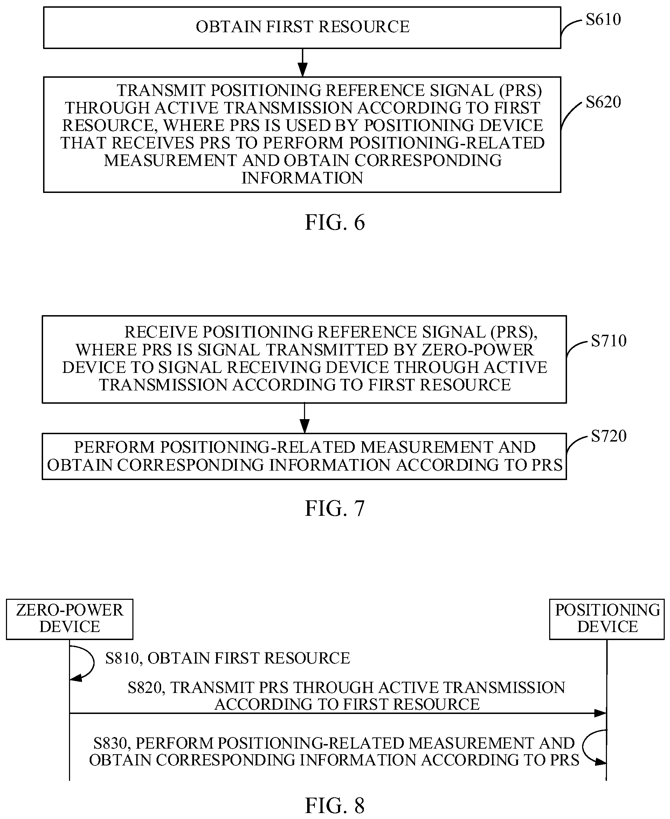

Reference may be made to FIG. 6, which illustrates a flowchart of a method for signal transmission provided in an exemplary embodiment of the disclosure. The method can be performed by a zero-power device, where the zero-power device can be the zero-power tag device 130 in the network architecture as illustrated in FIG. 1. The method may include the following.

At S610, a first resource is obtained.

At S620, a positioning reference signal (PRS) is transmitted through active transmission according to the first resource, where the PRS is used by a positioning device that receives the PRS to perform positioning-related measurement and obtain corresponding information.

In embodiments of the disclosure, the zero-power device can transmit the PRS to the positioning device through active transmission according to the obtained first resource.

The PRS is received by the positioning device, and is used by the positioning device to perform positioning-related measurement and obtain corresponding information.

That is, the first resource obtained by the zero-power device is a resource used by the zero-power device to transmit the PRS.

The first resource may be at least one of: a time domain resource, a frequency domain resource, a spatial domain resource, or a code domain resource.

During positioning, a large number of zero-power devices are usually deployed in the environment. If multiple zero-power devices transmit respective PRSs on the same resource, signal interference is likely to occur, thereby affecting positioning effect.

In summary, in embodiments of the disclosure, the zero-power device transmits the PRS to the positioning device through active transmission according to the obtained first resource. With such a solution, respective resources used by multiple zero-power devices to transmit respective PRSs can be determined, thereby effectively avoiding interference caused by the multiple zero-power devices actively transmitting the respective PRSs on the same resource, and thus further improving reception measurement and positioning accuracy of the positioning device.

Reference may be made to FIG. 7, which illustrates a flowchart of a method for signal transmission provided in an exemplary embodiment of the disclosure. The method can be performed by a positioning device, where the positioning device can be the network device 110 or the terminal device 120 in the network architecture as illustrated in FIG. 1. The method may include the following.

At S710, a PRS is received, where the PRS is a signal transmitted by a zero-power device through active transmission according to a first resource; and

At S720, positioning-related measurement is performed and corresponding information is obtained according to the PRS.

In embodiments of the disclosure, according to the received PRS, the positioning device performs positioning-related measurement and obtains corresponding information.

The PRS is a signal transmitted by the zero-power device to the positioning device through active transmission according to the first resource.

That is, the PRS received by the positioning device for positioning is the signal transmitted by the zero-power device to the positioning device based on the first resource. The first resource may be at least one of: a time domain resource, a frequency domain resource, a spatial domain resource, or a code domain resource.

In summary, in embodiments of the disclosure, the positioning device receives the PRS transmitted by the zero-power device through active transmission according to the first resource. The positioning device performs positioning-related measurement and obtains corresponding information according to the received PRS. In this solution, the PRS received by the positioning device can avoid interference with PRSs transmitted by other zero-power devices, thereby improving the reception measurement and positioning accuracy of the positioning device.

Reference may be made to FIG. 8, which illustrates a flowchart of a method for signal transmission provided in an exemplary embodiment of the disclosure. The method can be performed interactively by a positioning device and a zero-power device. The positioning device can be the network device 110 or the terminal device 120 in the network architecture as illustrated in FIG. 1, and the zero-power device can be the zero-power tag device 130 in the network architecture as illustrated in FIG. 1. The method may include the following.

At S810, the zero-power device obtains a first resource.

In embodiments of the disclosure, the zero-power device obtains a first resource that is used for transmitting a PRS.

The first resource may be at least one of: a time domain resource, a frequency domain resource, a spatial domain resource, or a code domain resource.

Since the zero-power device is relatively simple, the first resource is usually a time domain resource.

At S820, the zero-power device transmits a PRS through active transmission according to the first resource.

Correspondingly, the positioning device receives the PRS.

The PRS is used by the positioning device that receives the PRS to perform positioning-related measurement and obtain corresponding information.

That is, the PRS is a signal transmitted by the zero-power device through active transmission according to the first resource.

In embodiments of the disclosure, the zero-power device transmits the PRS to the positioning device according to the first resource, and the positioning device receives the corresponding PRS.

At S830, the positioning device performs positioning-related measurement and obtains corresponding information according to the PRS.

In embodiments of the disclosure, the positioning device performs positioning-related measurement and obtains corresponding information according to the received PRS.

Exemplarily, the positioning device positions, according to the received PRS, the zero-power device that transmits the PRS.

To obtain position information of a target node, some positioning reference nodes can be fixedly arranged at known positions. The target node may refer to a mobile phone, a zero-power electronic tag, or other nodes in the network. The reference node may refer to a base station in a cellular system, an AP in a Wi-Fi system, or a zero-power electronic tag.

For example, the reference node is a zero-power electronic tag. The zero-power electronic tag can harvest and/or store one or more ambient energies such as RF energy, light energy, solar energy, thermal energy, etc., and then actively transmit a PRS. Based on measurement results of signals transmitted by different reference nodes, such as one or more of the following information: reference signal receiving power (RSRP), received signal strength indication (RSSI), signal to interference plus noise ratio (SINR), phase, line of sight (LOS) indication, timing, angle, etc., the positioning device selects reference tags that are closer to the target node by using a clustering algorithm, and a position of the target node can be determined based on position information of the selected reference tags.

During positioning, a to-be-positioned target node is usually required to measure as many reference nodes as possible to obtain accurate position information.

If the reference nodes are base stations or APs, deploying a large quantity of base stations or APs is very costly. However, if the reference nodes are electronic tags, the reference nodes can be deployed massively, for example, reference nodes may be fixed at an interval of 1 m or even 0.5 m. Therefore, low cost and high accuracy can be achieved, while also making up for shortcomings of some existing positioning methods, such as a global navigation satellite system (GNSS), a cellular TDOA, etc., in indoor scenarios.

The zero-power tag device can serve as a reference node or a target node to transmit a reference signal through active transmission, and one or more signal source nodes/network nodes/receiving nodes/readers measure the reference signal.

The signal source may be a base station, an AP, a mobile phone, etc., which is usually equipped with a more advanced receiver. Compared to ambient internet of thingt (A-IoT) zero-power tags, a measurement result of the signal source is more accurate.

The signal transmitted by the zero-power tag device is a PRS, a measurement signal, a reference signal/sequence, etc, which are collectively referred to as "PRS" in the disclosure for ease of description.

A measurement quantity may be one or more of RSRP, RSSI, SINR, phase, LOS indication, timing, angle, etc.

Each reference tag is fixed at a specific position, and position information of the reference tag may be in the form of global coordinates, such as latitude, longitude, altitude, etc., or may be in the form of local coordinates or relative coordinates, such as relative coordinates (x, *y),* a floor number, etc., within a building.

Optionally, the position information of the reference tag is stored in the corresponding reference tag. The position information of the reference tag is also stored in a positioning network or a server on the network side, and the position information is in a one-to-one correspondence with an identity (ID) of the reference tag. During positioning, a node that stores the position information can transmit the required position information to a specific node (a node that calculates a target position) if needed.

A reference signal transmitted by each reference tag #n reaches a signal source #m, for example, RSRP(n, m), then after measurement by M=4 signal sources, an RSRP vector with a length of *M* is obtained for each reference tag *#n.* That is, RSRP(n) *=* [RSRP(*n*,1), RSRP(n,2), RSRP(n,3), RSRP(n,4)]. Similarly, for a target node, a vector RSRP(target) *=* [RSRP(target,1), RSRP(target,2), RSRP(target,3), RSRP(target,4)] is also obtained.

The RSRP may be replaced by other measurement results mentioned above, such as phase, i.e., phase(n) *=* [phase(n,1), phase(n,2), phase(n,3), phase(n,4)], or a combination of multiple measurement results. For example, each signal source #m measures both a signal strength and a phase of the reference signal transmitted by the reference tag #n, then a vector with a length of M*2 is formed, i.e., Metric(n) *=* [RSRP(target,1), RSRP(target,2), RSRP(target,3), RSRP(target,4), phase(n,1), phase(n,2), phase(n,3), phase(n,4)].

In the disclosure, a sequence of measurement results in a vector is not limited, provided that the same structure is used for each reference node and the target node.

For example, an RSRP and a phase measured by the first signal source may be placed first, then results of the second signal source are placed, i.e., Metric(n) *=* [RSRP(target,1), phase(n,1), RSRP(target,2), phase(n,2), RSRP(target,3), phase(n,3), RSRP(target,4), phase(n,4)].

In specific clustering algorithms, clustering metrics, and a clustering algorithm may be mainly considered in the disclosure.
(1) Clustering metrics: the measurement result vector described above, such as RSRP, may be directly used, or some variants of the measurement result vector may be used.

The first manner is to remove some excessively small results. Assume that a metric has a length of 4: RSRP(target)=[RSRP(target,1), RSRP(target,2), RSRP(target,3), RSRP(target,4)]. A result RSRP(target,3) that is obtained by the third signal source through measurement is very small and therefore may be removed, and the remaining three may be retained, i.e., RSRP(target)=[RSRP(target,1), RSRP(target,2), RSRP(target,4)]. In this way, inaccurate elements can be prevented from affecting clustering and interpolation performance, and calculation complexity may also be reduced.

The second manner may include Euclidean distance, Manhattan distance, Chebyshev distance, etc., between the target node and the reference node.

The Euclidean distance is taken as an example. The Euclidean distance between the target node and the reference node #n is a norm of a difference between corresponding RSRP vectors, mathematically expressed as:

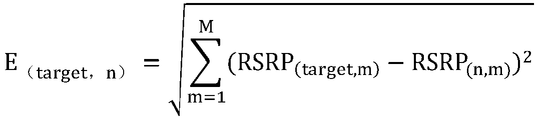

In the above, the distance can be calculated with reference to the first manner, and results from some specific signal sources can first be removed from each RSRP vector.

(2) Clustering algorithm: used for determining one or more reference nodes whose measurement result characteristics are similar to those of the target node. Some common algorithms include K-nearest neighbors (KNN), K-means, density-based spatial clustering of applications with noise (DBSCAN), spectral clustering, etc.

*K* reference tags are selected from *N* reference tags by using the clustering algorithm. A position of a target user can be obtained through interpolation based on positions of the selected K reference tags. In this case, an interpolation weight needs to be designed. A method for determining an interpolation weight can be implemented according to the Euclidean distance:

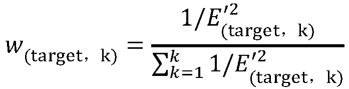

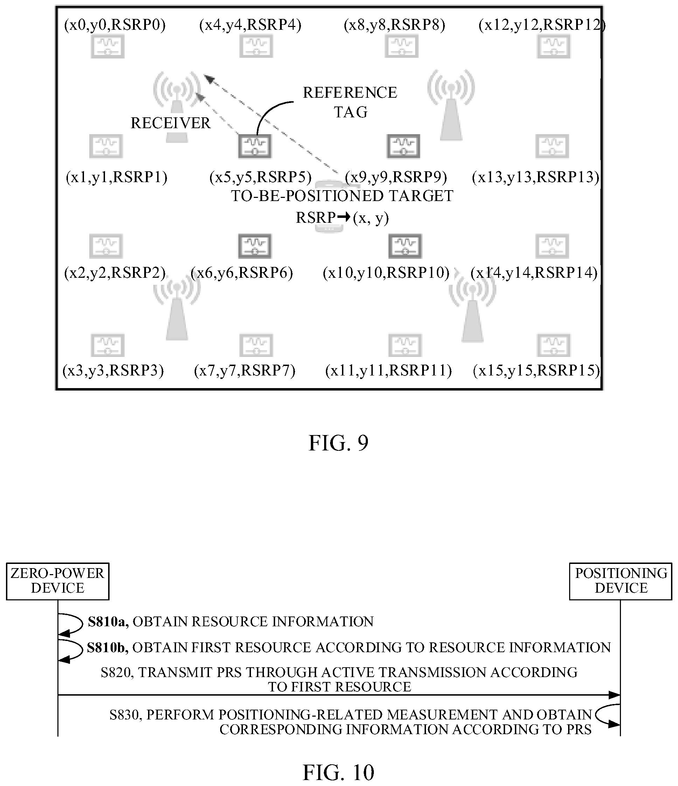

Reference may be made to FIG. 9, which is a schematic diagram illustrating positioning provided in an exemplary embodiment of the disclosure. As illustrated in FIG. 9, a to-be-positioned target (i.e., a target node) may be an ordinary mobile phone or an A-IoT device that is not a reference tag, and reference tags (i.e., reference nodes) will be fixed at specific positions. The reference tags and the to-be-positioned target will transmit respective PRSs, where a transmission manner for the PRS includes active transmission and backscattering.

The PRS will be received and measured by one or more receivers (i.e., positioning devices). By comparing a measurement result of a target UE with measurement results of other reference tags, a reference tag closest to the target UE is selected by using the clustering algorithm, and thus a position of the target UE is determined.

As illustrated in FIG. 9, measurement of RSRP is taken as an example, but other measurement quantities, such as RSSI, SINR, phase, phase difference, LOS indication (indicating whether it is an LOS path, or the possibility of an LOS path), time, angle, etc., are not excluded.

A receiver can receive multiple different measurement quantities.

Position information of the reference tag may be directly carried in modulation information transmitted by the reference tag. For example, the position information *(x, y)* may be encoded into a binary sequence in a specific manner and carried in a transmitted signal through OOK modulation. Alternatively, the position information may be indirectly carried in an ID or other information. For example, when a network deploys reference tags, the network records an ID and position information *(x, y)* of each reference tag, such that a one-to-one correspondence table is formed. In this way, only ID information is required to be carried in the modulation information transmitted by the reference tag, and the network device can determine corresponding position information of each reference tag according to the correspondence table.

In some embodiments, a transmission power for the PRS is a fixed power, or the transmission power for the PRS is associated with the zero-power device.

In embodiments of the disclosure, a transmission power used by the zero-power device to transmit the PRS may be fixed or may be related to the zero-power device. Exemplarily, a fixed transmission power is required for a zero-power tag using active transmission. For example, a transmission power of 0 dBm is used for all tags.

In embodiments of the disclosure, a solution for determining the transmission power used by the zero-power device to transmit the PRS is provided, where the transmission power may be a fixed power or may be determined by the zero-power device. With such a solution, the design for transmitting the PRS through active transmission can be simplified, thereby reducing standardization complexity.

In some embodiments, the method as illustrated in FIG. 8 further includes the following. The zero-power device reports the transmission power for the PRS to the positioning device.

That is, the transmission power for the PRS is reported by the zero-power device to the positioning device.

In embodiments of the disclosure, the zero-power device can report the transmission power used by the zero-power device to transmit the PRS to the positioning device.

Exemplarily, the zero-power tag device indicates the transmission power (e.g., as one of user capabilities of a tag) to a reader/network device (e.g., a location management function (LMF)). Different zero-power tag devices can use different transmission powers, for example, tag-1 uses a transmission power of 0 dB, and tag-2 uses a transmission power of 3 dB.

When a target position is determined by using the clustering method described in the above embodiment, adjustments need to be made according to different transmission powers of tags. For example, since the transmission power used by tag-2 is 3 dB higher than that used by tag-1, 3 dB needs to be subtracted from RSRP/RSSI measurement results corresponding to tag-2, to equalize transmission powers of different tags. The positioning device adjusts RSRP/RSSI measurement results according to values of the different transmission powers.

In embodiments of the disclosure, the solution for the zero-power device to report the transmission power to the positioning device is provided, such that the positioning device can adjust positioning-related measurement results according to different transmission powers, thereby improving measurement accuracy and positioning precision.

In some embodiments, the method as illustrated in FIG. 8 further includes the following. The zero-power device reports a transmission manner for the PRS to the positioning device.

That is, the transmission manner for the PRS is reported by the zero-power device to the positioning device.

In embodiments of the disclosure, the zero-power device can report the transmission power used by the zero-power device to transmit the PRS to the positioning device, where the transmission manner includes active transmission and backscattering.

Exemplarily, the zero-power tag indicates the transmission manner (backscattering or active transmission) to a reader/network device (e.g., an LMF):
(1) If active transmission is adopted, then the zero-power tag can further indicate a transmission power used for transmitting a PRS; and
(2) If backscattering is adopted, then the zero-power tag can further indicate a parameter(s) related to a backscatter loss of the zero-power tag.

For example, when a signal of 10 dB is incident on the zero-power tag, there will be a 3 dB power loss after backscattering, and thus a backscatter signal only has 7 dB.

The positioning device can adjust RSRP/RSSI measurement results according to a transmission type of the zero-power tag.

For example, tag-1 performs active transmission at 0 dB, and tag-2 backscatters a signal from a 20 dBm signal source, with a backscatter loss of *α* = 3 dB. Therefore, a path loss for an actively transmitted signal by tag-1 is obtained by subtracting a measured RSRP1 from the transmission power used by tag-1, i.e., Pathloss1=0-RSRP1. Correspondingly, a path loss for tag-2 is 20-RSRP2-*α*. Due to backscattering, a signal from a signal source to the measurement actually experiences a round-trip path loss, and thus one-way Pathloss2=20-RSRP2-*α*-3.

In embodiments of the disclosure, the solution for the zero-power device to report the transmission manner to the positioning device is provided, such that the positioning device can adjust positioning-related measurement results according to different transmission manners, thereby improving measurement accuracy and positioning precision.

In some embodiments, the first resource has a specific time domain characteristic, or the first resource has a specific frequency domain characteristic, or the first resource has a specific spatial domain characteristic, or the first resource has a specific code domain characteristic.

In embodiments of the disclosure, the first resource may have at least one of the following characteristics: specific time domain characteristic, specific frequency domain characteristic, specific spatial domain characteristic, or specific code domain characteristic.

That is, the first resource may be at least one of: a time domain resource, a frequency domain resource, a spatial domain resource, or a code domain resource.

Exemplarily, the first resource may be a resource with a specific time domain characteristic, such as a symbol, a slot, a frame, etc.

Exemplarily, the first resource may be a resource with a specific frequency domain characteristic, such as a frequency, a subcarrier, etc.

Exemplarily, the first resource may be a resource with a specific spatial domain characteristic.

Exemplarily, the first resource may be a resource with a specific code domain characteristic.

In embodiments of the disclosure, a solution for the characteristic type of the first resource is provided, such that multiple feasible options can be provided for determining the type of the first resource, thereby improving the flexibility of the disclosure, and thus providing more space for future expansion.

In some embodiments, the first resource is part or all of time domain resources within a time window, and/or the first resource is a time domain resource that satisfies a first preset rule within a time window.

In embodiments of the disclosure, the first resource has a specific time domain characteristic. The first resource may be part or all of time domain resources within a time window, or may be a time domain resource that satisfies the first preset rule within a time window, or may be part or all of time domain resources that satisfy the first preset rule within a time window.

For example, the first resource may be all/part of time domain resources within a time window W, or the first resource may be a resource within a symbol/slot whose index satisfies a certain characteristic (e.g., *mod(slot_index,* 10) = 0), or the first resource may be a time domain resource repeated with a period of *T* within the time window *W.*

In embodiments of the disclosure, a feasible solution that the first resource has a specific time domain characteristic is provided. The first resource is determined according to the time window, which can simplify the difficulty of the method, thereby reducing the design workload.

In some embodiments, the time window is a time domain resource repeated with a period of *T* in time domain, or the time window is *L* consecutive time units after a trigger signal is received by the zero-power device, where L is a positive integer.

In embodiments of the disclosure, the time window is repeated with the period of *T* in time domain. Alternatively, several consecutive time units after the trigger signal is received by the zero-power device are determined as the time window.

The trigger signal may be a synchronization signal, a beacon signal, a paging signal, or other signals transmitted by a base station or a UE to an A-IoT device.

In embodiments of the disclosure, a feasible solution for determining the time window is provided, which can reduce standardization complexity.

In some embodiments, the first preset rule is associated with an index of a time unit.

In embodiments of the disclosure, the first preset rule is related to the index of the time unit.

That is, the first preset rule can be determined according to the index of the time unit.

In embodiments of the disclosure, a feasible solution for determining the first preset rule according to the index of the time unit is provided. The existing index of the time unit can be used to simplify the design of the first preset rule.

In some embodiments, the time unit is one of: a slot, a symbol, a subframe, or a frame.

In embodiments of the disclosure, the time unit is one or a combination of a slot, a symbol, a subframe, and a frame.

In embodiments of the disclosure, a specific type of time unit is provided, thereby further optimizing the feasibility of the technical solutions of the disclosure.

In some embodiments, the first resource is at least one frequency domain resource or at least one frequency domain resource combination, or the first resource is a frequency domain resource that has at least one frequency offset relative to a frequency of a trigger signal, or the first resource is a frequency domain resource that satisfies a second preset rule.

In embodiments of the disclosure, the first resource has a specific frequency domain characteristic.

The first resource may be at least one frequency domain resource or at least one frequency domain resource combination.

The first resource may be a frequency domain resource that has a certain frequency offset relative to the frequency of the trigger signal.

The first resource may be a frequency domain resource that satisfies a set second preset rule.

Exemplarily, the first resource may be a frequency combination {f1=2505 MHz, f2=2408 MHz}, or a combination of frequencies offset relative to the frequency of the trigger signal {fd1=0 MHz, f2=3 MHz}, or a subcarrier index satisfying a certain characteristic (e.g., subcarrier index = *12*n + i).*

In embodiments of the disclosure, a feasible solution that the first resource has a specific frequency domain characteristic is provided. The first resource is determined according to the frequency domain resource, which can simplify the difficulty of the method, thereby reducing the design workload.

In some embodiments, each of the at least one frequency domain resource combination contains at least two frequencies, or each of the at least one frequency domain resource combination contains at least two subcarriers, or each of the at least one frequency domain resource combination contains at least two carriers, or each of the at least one frequency domain resource combination contains at least two subbands, or each of the at least one frequency domain resource combination contains at least two bands.

In embodiments of the disclosure, each frequency domain resource combination at least contains: two frequencies, two subcarriers, two carriers, two subbands, two bands, etc.

In embodiments of the disclosure, a specific type of frequency domain resource is provided, thereby further optimizing the feasibility of the technical solutions of the disclosure.

In some embodiments, the second preset rule is associated with an index of a frequency unit, or the second preset rule is associated with a frequency domain offset relative to a target frequency unit of a trigger signal.

In embodiments of the disclosure, the second preset rule may be related to the index of the frequency unit, or may be related to the frequency domain offset relative to the target frequency unit of the trigger signal. That is, the second preset rule may be determined according to the index of the frequency unit, or may be determined according to the frequency domain offset relative to the target frequency unit of the trigger signal.

In embodiments of the disclosure, a feasible solution for determining the second preset rule according to the frequency unit is provided. The existing frequency unit can be used to simplify the design of the second preset rule.

In some embodiments, the frequency unit is one of: a frequency, a subcarrier, a carrier, a subband, or a band.

In embodiments of the disclosure, the frequency unit is one or a combination of a frequency, a subcarrier, a carrier, a subband, and a band.

In embodiments of the disclosure, a feasible solution for determining the frequency unit is provided, which can reduce standardization complexity.

In some embodiments, the first resource is at least one direction or at least one direction combination, and each of the at least one direction combination contains at least two azimuth angles, or the first resource is a direction that has at least one angle offset relative to a direction of a trigger signal, or the first resource is a direction that is quasi-co-located (QCL) with the direction of the trigger signal.

In embodiments of the disclosure, the first resource has a specific spatial domain characteristic. The first resource may be one or more directions or one or more direction combinations. The first resource may be a direction that has a certain angle offset relative to the direction of the trigger signal. The first resource may be a direction that is QCL with the direction of the trigger signal. Each direction combination contains at least two azimuth angles.

Exemplarily, the first resource may be azimuth angles of {a1=0°, a2=90°, a3=180°, a4=270°}, or a combination of angles offset relative to the direction of the trigger signal {ad1=0°, ad2=90°}, or a direction that is QCL with the direction of the trigger signal.

In embodiments of the disclosure, a feasible solution that the first resource has a specific spatial domain characteristic is provided. The first resource is determined according to direction information, which can simplify the difficulty of the method, thereby reducing the design workload.

In some embodiments, the first resource is at least one sequence or at least one sequence combination, where each of the at least one sequence combination contains at least two sequences, and the at least two sequences are orthogonal or quasi-orthogonal.

In embodiments of the disclosure, the first resource has a specific code domain characteristic. The first resource may be one or more sequences, or may be one or more sequence combinations, each of which is formed by at least two sequences. At least two sequences are orthogonal, or at least two sequences are quasi-orthogonal.

Exemplarily, for example, a sequence [1 1 1 1] and a sequence [1 -1 1 -1] are orthogonal.

In embodiments of the disclosure, a feasible solution that the first resource has a specific code domain characteristic is provided. The first resource is determined according to the sequence combinations, which can simplify the difficulty of the method, thereby reducing the design workload.

Reference may be made to FIG. 10, which illustrates a flowchart of a method for signal transmission provided in an embodiment of the disclosure. As illustrated in FIG. 10, the operations at S810 as illustrated in FIG. 8 can be implemented as operations at S810a and S810b.

At S810a, the zero-power device obtains resource information.

At S810b, the zero-power device obtains the first resource according to the resource information.

That is, the first resource is determined according to the resource information.

In embodiments of the disclosure, the zero-power device can determine the first resource according to the obtained resource information.

The resource information may be one or more of time domain resource information, frequency domain resource information, spatial domain resource information, and code domain resource information.

In embodiments of the disclosure, a solution for obtaining the first resource is provided. The zero-power device obtains the first resource based on the resource information, and then transmits the PRS to the positioning device through active transmission according to the first resource. With such a solution, the resource used by the zero-power device to transmit the PRS can be determined according to the resource information, thereby effectively avoiding interference caused by multiple zero-power devices transmitting respective PRSs on the same resource.

In some embodiments, the resource information is obtained by the zero-power device through random selection, and/or the resource information is obtained by the zero-power device according to part or all of ID information of the zero-power device, and/or the resource information is obtained by the zero-power device according to signaling configuration transmitted by the positioning device.

In embodiments of the disclosure, the resource information may be randomly selected by the zero-power device, may be selected by the zero-power device according to part or all of the ID information of the zero-power device, may be selected by the zero-power device according to the signaling configuration transmitted by the positioning device, or may be selected by using a combination of the above manners.

In embodiments of the disclosure, a solution for selecting the resource information is provided, such that multiple manners can be provided for the zero-power device to obtain the resource information, thereby improving the flexibility of the manner of selecting the resource information, reducing the design workload, and thus providing more space for future expansion.

In some embodiments, the resource information includes at least one of: time domain resource information, frequency domain resource information, spatial domain resource information, or code domain resource information.

That is, the resource information may include any one of time domain resource information, frequency domain resource information, spatial domain resource information, and code domain resource information, or may include any combination of time domain resource information, frequency domain resource information, spatial domain resource information, and code domain resource information.

Exemplarily, the resource information may be determined according to a combination of time domain resource information and frequency domain resource information, or may be determined according to a combination of time domain resource information and spatial domain resource information, or may be determined according to a combination of time domain resource information and code domain resource information.

In embodiments of the disclosure, the resource information includes a combination of one or more of the following.
1) Time domain resource information can refer to one or more symbols, slots, frames, subframes, etc.
2) Frequency domain resource information can refer to one or more frequencies (e.g., frequencies corresponding to absolute 2405.5 MHz), subbands, subcarriers (e.g., subcarriers in an orthogonal frequency-division multiplexing (OFDM) system), carriers, bands, etc.
3) Spatial domain resource information can refer to one or more spatial directions. For example, for multiple zero-power devices that are able to control a signal direction, the spatial domain resource information can point to different directions for active transmission or backscattering of signals.
4) Code domain resource information can allow different zero-power devices to load different orthogonal code sequences, etc., during active transmission or backscattering of a reference signal.

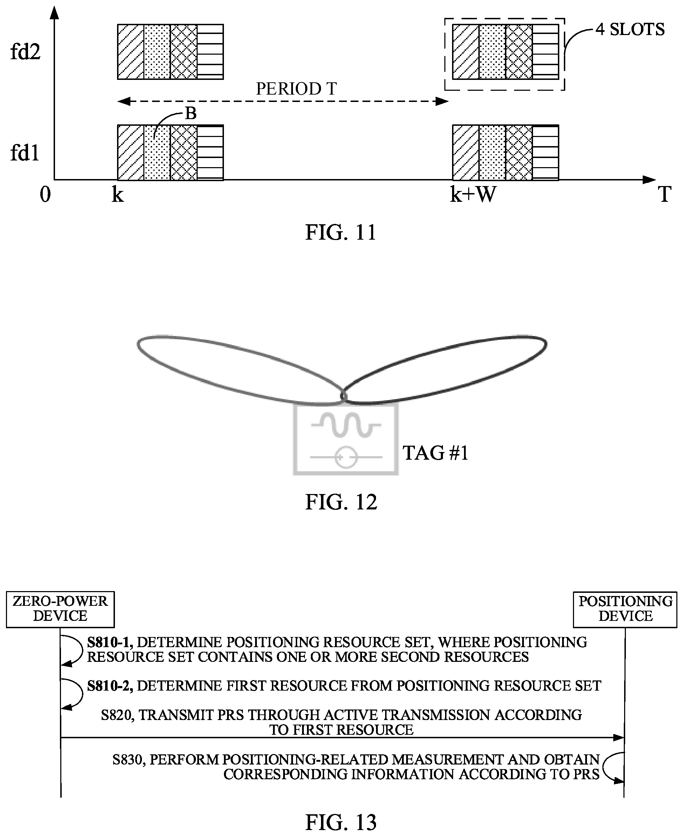

Reference may be made to FIG. 11, which is a schematic diagram illustrating configuration information provided in an exemplary embodiment of the disclosure.

Reference may be made to FIG. 12, which is a schematic diagram illustrating configuration information provided in another exemplary embodiment of the disclosure.

Exemplarily, in embodiments of the disclosure, the following configuration information for orthogonal positioning resources can be provided.

### (1) Orthogonal resources are determined based on time domain + frequency domain

It is assumed that a positioning resource pool is pre-configured. As illustrated in FIG. 11, A) time domain configuration information indicates a window *W* with a period of *T,* where the window *W* contains L=4 slots, and a starting offset of the window *W* is denoted by *k;* B) frequency domain configuration information indicates that a frequency offset relative to an incoming wave signal is {fd1=0 MHz, fd2=3 MHz}, where the frequency domain information may be determined with reference to spectrum characteristics, local spectrum specifications, characteristics of a zero-power component, etc.; C) then, it can be determined that the total positioning resources within each period of *T* are Ntotal=2L.

A reference tag and/or a target A-IoT device will harvest and store ambient energy in advance, and actively transmit a PRS at an instant of a selected positioning resource.

For example, if tag 1 selects a resource B (i.e., the second of the 4 slots as illustrated in FIG. 11) that is at an instant k+1 and on a frequency *fd*1 as a resource for backscattering a PRS, then tag 1 can start to receive a power-supply signal at an instant k-1 to store some energy and then transmit the PRS at the instant k+1.

### (2) Orthogonal resources are determined based on time domain + spatial domain

It is assumed that time domain configuration information indicates L consecutive slots (resources before slot *#n* and after slot *n+L**10 are excluded), whose slot indexes satisfy a condition *mod*(slot_index, 10)=0, after a slot (slot #n) selected/configured by a zero-power device, and spatial domain resources are used for transmitting a PRS in X different directions by turns, then it can be determined that the total time-space orthogonal resources are Ntotal=L*X.

As illustrated in FIG. 12, a reference tag and a to-be-positioned target will transmit a power-supply signal or a PRS in X=2 different directions, with relatively small cross-interference between the different directions.

For one thing, considering that A-IoT devices are generally very simple, when active transmission is used, A-IoT devices may not be able to support a very narrow transmission beam, and corresponding space division multiplexing (SDM) effect will be poor. For another thing, a placement angle/orientation of a target device in space is highly random, and sometimes two beams may be aligned in an east-west direction or in a north-south direction. Different placement angles/orientations will have a significant impact on positioning results.

### (3) Orthogonal resources are determined based on time domain + code domain

It is assumed that time domain configuration information indicates all slot resources within a window *W* with a length of *L* slots, where a start position of the window *W* may be k-th slot (that is, slot *#n+k)* after a slot (slot *#n)* when a zero-power device receives a PRS transmitted by a signal source, and a code domain resource is Y different orthogonal sequences, then it can be determined that the total time-space orthogonal resources are Ntotal=L*Y.

In embodiments of the disclosure, a solution for indicating the resource information is provided, which can provide multiple reference resource information for the resource information, such that various requirements for a resource(s) occupied by the zero-power device to transmit a PRS can be met, thereby providing optimization space for the resource(s) occupied by the zero-power device to transmit the PRS.

Reference may be made to FIG. 13, which illustrates a flowchart of a method for signal transmission provided in an exemplary embodiment of the disclosure. As illustrated in FIG. 13, the operations at S810 as illustrated in FIG. 8 can be implemented as operations at S810-1 and S810-2.

At S810-1, the zero-power device determines a positioning resource set, where the positioning resource set contains one or more second resources.

At S810-2, the zero-power device determines the first resource from the positioning resource set.

That is, the first resource is determined according to the positioning resource set, and the positioning resource set contains one or more second resources.

In embodiments of the disclosure, the zero-power device determines the positioning resource set that contains one or more second resources, and then determines a first resource to be used for transmitting a PRS from the determined positioning resource set.

In embodiments of the disclosure, a feasible solution for determining the first resource according to the positioning resource set is provided, which can simplify the related design of the zero-power device, thereby reducing standardization complexity.

In some embodiments, the second resource has a specific time domain characteristic, or the second resource has a specific frequency domain characteristic, or the second resource has a specific spatial domain characteristic, or the second resource has a specific code domain characteristic.

In embodiments of the disclosure, the second resource may have at least one of the following characteristics: specific time domain characteristic, specific frequency domain characteristic, specific spatial domain characteristic, or specific code domain characteristic.

That is, the second resource may be at least one of: a time domain resource, a frequency domain resource, a spatial domain resource, or a code domain resource.

Exemplarily, the second resource may be a resource with a specific time domain characteristic, such as a symbol, a slot, a frame, etc.

Exemplarily, the second resource may be a resource with a specific frequency domain characteristic, such as a frequency, a subcarrier, etc.

Exemplarily, the second resource may be a resource with a specific spatial domain characteristic.

Exemplarily, the second resource may be a resource with a specific code domain characteristic.

In embodiments of the disclosure, a solution for the characteristic type of the second resource is provided, such that multiple feasible options can be provided for determining the type of the second resource, thereby improving the flexibility of the disclosure, and thus providing more space for future expansion.

In some embodiments, the second resource is part or all of time domain resources within a time window, and/or the second resource is a time domain resource that satisfies a third preset rule within a time window.

In embodiments of the disclosure, the second resource has a specific time domain characteristic. The second resource may be part or all of time domain resources within a time window, or may be a time domain resource that satisfies the third preset rule within a time window, or may be part or all of time domain resources that satisfy the third preset rule within a time window.

In embodiments of the disclosure, a feasible solution that the second resource has a specific time domain characteristic is provided. The second resource is determined according to the time window, which can simplify the difficulty of the method, thereby reducing the design workload.

In some embodiments, the time window is a time domain resource repeated with a period of *T* in time domain, or the time window is *L* consecutive time units after a trigger signal is received by the zero-power device, where L is a positive integer.

In embodiments of the disclosure, the time window is repeated with the period of *T* in time domain. Alternatively, several consecutive time units after the trigger signal is received by the zero-power device are determined as the time window.

The trigger signal may be a synchronization signal, a beacon signal, a paging signal, or other signals transmitted by a base station or a UE to an A-IoT device.

In embodiments of the disclosure, a feasible solution for determining the time window is provided, which can reduce standardization complexity.

In some embodiments, the third preset rule is associated with an index of a time unit.

In embodiments of the disclosure, the third preset rule is related to the index of the time unit.

That is, the third preset rule can be determined according to the index of the time unit.

In embodiments of the disclosure, a feasible solution for determining the third preset rule according to the index of the time unit is provided. The existing index of the time unit can be used to simplify the design of the third preset rule.

In some embodiments, the time unit is one of: a slot, a symbol, a subframe, or a frame.

In embodiments of the disclosure, the time unit is one or a combination of a slot, a symbol, a subframe, and a frame.

In embodiments of the disclosure, a specific type of time unit is provided, thereby further optimizing the feasibility of the technical solutions of the disclosure.

In some embodiments, the second resource is at least one frequency domain resource combination, or the second resource is a frequency domain resource that has at least one frequency offset relative to a frequency of a trigger signal, or the second resource is a frequency domain resource that satisfies a fourth preset rule.

In embodiments of the disclosure, the second resource has a specific frequency domain characteristic.

The second resource may be at least one frequency domain resource or at least one frequency domain resource combination.

The second resource may be a frequency domain resource that has a certain frequency offset relative to the frequency of the trigger signal.

The second resource may be a frequency domain resource that satisfies a set fourth preset rule.

Exemplarily, the second resource may be a frequency combination {f1=2505 MHz, f2=2408 MHz}, or a combination of frequencies offset relative to the frequency of the trigger signal {fd1=0 MHz, f2=3 MHz}, or a subcarrier index satisfying a certain characteristic (e.g., subcarrier index = *12*n + i).*

In embodiments of the disclosure, a feasible solution that the second resource has aspecific frequency domain characteristic is provided. The second resource is determined according to the frequency domain resource, which can simplify the difficulty of the method, thereby reducing the design workload.

In some embodiments, each of the at least one frequency domain resource combination contains at least two frequencies, or each of the at least one frequency domain resource combination contains at least two subcarriers, or each of the at least one frequency domain resource combination contains at least two carriers, or each of the at least one frequency domain resource combination contains at least two subbands, or each of the at least one frequency domain resource combination contains at least two bands.

In embodiments of the disclosure, each frequency domain resource combination at least contains: two frequencies, two subcarriers, two carriers, two subbands, two bands, etc.

In embodiments of the disclosure, a specific type of frequency domain resource is provided, thereby further optimizing the feasibility of the technical solutions of the disclosure.

In some embodiments, the fourth preset rule is associated with an index of a frequency unit, or the fourth preset rule is associated with a frequency domain offset relative to a target frequency unit of a trigger signal.

In embodiments of the disclosure, the fourth preset rule may be related to the index of the frequency unit, or may be related to the frequency domain offset relative to the target frequency unit of the trigger signal. That is, the fourth preset rule may be determined according to the index of the frequency unit, or may be determined according to the frequency domain offset relative to the target frequency unit of the trigger signal.

In embodiments of the disclosure, a feasible solution for determining the fourth preset rule according to the frequency unit is provided. The existing frequency unit can be used to simplify the design of the fourth preset rule.

In some embodiments, the frequency unit is one of: a frequency, a subcarrier, a carrier, a subband, or a band.

In embodiments of the disclosure, the frequency unit is one or a combination of a frequency, a subcarrier, a carrier, a subband, and a band.

In embodiments of the disclosure, a feasible solution for determining the frequency unit is provided, which can reduce standardization complexity.

In some embodiments, the second resource is one or more direction combinations, and each of the one or more direction combinations is formed by at least two azimuth angles, or the second resource is a direction that has at least one angle offset relative to a direction of a trigger signal, or the second resource is a direction that is QCL with the direction of the trigger signal.

In embodiments of the disclosure, the second resource has a specific spatial domain characteristic. The second resource may be one or more direction combinations, and each of the one or more direction combinations is formed by at least two azimuth angles. The second resource may be a direction that has a certain angle offset relative to the direction of the trigger signal. The second resource may be a direction that is QCL with the direction of the trigger signal.

Exemplarily, the second resource may be azimuth angles of {a1=0°, a2=90°, a3=180°, a4=270°}, or a combination of angles offset relative to the direction of the trigger signal {ad1=0°, ad2=90°}, or a direction that is QCL with the direction of the trigger signal.

In embodiments of the disclosure, a feasible solution that the second resource has a specific spatial domain characteristic is provided. The second resource is determined according to direction information.

In some embodiments, the second resource is one or more sequence combinations, and each of the one or more sequence combinations is formed by at least two sequences, where the at least two sequences are orthogonal or quasi-orthogonal.

In embodiments of the disclosure, the second resource has a specific code domain characteristic. The second resource is one or more sequence combinations, each of which is formed by at least two sequences. At least two sequences are orthogonal, or at least two sequences are quasi-orthogonal.

Exemplarily, for example, a sequence [1 1 1 1] and a sequence [1 -1 1 -1] are orthogonal.

In embodiments of the disclosure, a feasible solution that the second resource has a specific code domain characteristic is provided. The second resource is determined according to the sequence combinations, which can simplify the difficulty of the method, thereby reducing the design workload.

In some embodiments, all or part of the positioning resource set is randomly selected by the zero-power device, or all or part of the positioning resource set is selected by the zero-power device according to part or all of ID information of the zero-power device, or all or part of the positioning resource set is selected by the zero-power device according to signaling configuration transmitted by the positioning device.

In embodiments of the disclosure, the positioning resource set may be randomly selected by the zero-power device, may be selected by the zero-power device according to part or all of the ID information of the zero-power device, may be selected by the zero-power device according to the signaling configuration transmitted by the positioning device, or may be selected by using a combination of the above manners.

Exemplarily, based on the following manners, the zero-power device can select one or more second resources from the positioning resource set as a resource(s) occupied by the zero-power device to transmit a positioning signal through active transmission.
(1) Random selection: for example, the randomness can be in accordance with a uniform distribution.
(2) A selection is made according to ID information of the zero-power device, and optionally, all or part of bits of the ID can be used.
(3) A selection is made according to signaling configuration transmitted by the positioning device.

It is assumed that the positioning device has established connections with surrounding zero-power devices Tags before positioning, then resource utilization can be maximized.

The signaling may explicitly configure the zero-power device with time domain/frequency domain/spatial domain/code domain resource configuration information used by the zero-power device to determine the resource(s). With such a solution, there is no need to first determine a total resource set and then select from it, and the resource(s) can be directly determined according to the resource configuration information indicated by the signaling. Therefore, this solution is suitable for situations with relatively few zero-power devices.

The signaling may configure one resource set, such that the zero-power device can select one resource from the resource set by using random selection, ID-based manner, etc. In this case, the positioning device can configure the same resource set for multiple zero-power devices simultaneously through broadcast or multicast, such that some conflicts can be avoided through selection by the zero-power devices. In this way, excessive signaling interaction can be avoided. Therefore, this solution is suitable for situations with many zero-power devices.

Further, when the positioning device multicasts resource set configuration information, the positioning device can group the zero-power devices.

For example, zero-power device group 1 uses resource set 1, zero-power device group 2 uses resource set 2. In this way, conflicts between groups can be solved through the configuration of the positioning device, and conflicts within a group can be solved through selection by the zero-power devices. The signaling can be an ID (used for selection of a positioning resource(s)), and the zero-power device can select a resource(s) from a total positioning resource set according to ID information for positioning.

### (4) A combination of the above three manners.

For example, one resource subset is first determined according to an ID of the zero-power device, and then one resource is randomly selected from the resource subset as a first resource for transmitting a PRS.

For another example, one piece of time domain resource information is determined according to signaling configuration, and then one piece of frequency domain resource information is selected according to ID information.

For another example, one piece of time domain resource information is determined according to an ID of the zero-power device, and then spatial domain resource information is determined according to a specific rule.

A relationship between zero-power devices and first resources may be one of: one-to-one correspondence, where each tag corresponds to one resource; one-to-many correspondence, where each tag corresponds to multiple resources; or many-to-one correspondence, where multiple tags correspond to one resource.

For example, some zero-power devices are far apart from one another and generally would not be used simultaneously. In this case, the zero-power devices can share the same resource.

In embodiments of the disclosure, a feasible solution for selecting the positioning resource set is provided, such that multiple manners can be provided for selecting the resource(s) used by the zero-power device to transmit the PRS, thereby improving the flexibility of the manner of selecting the positioning resource set, reducing the design workload, and thus providing more space for future expansion.

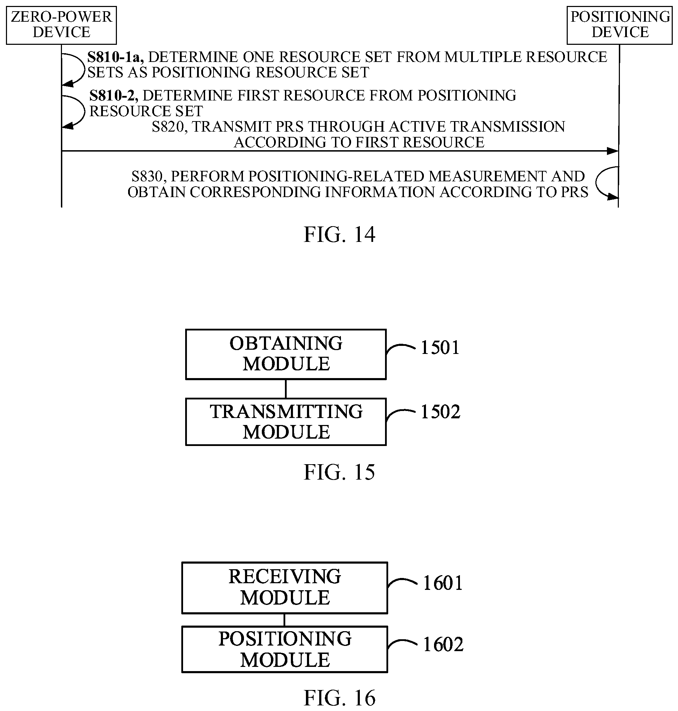

Reference may be made to FIG. 14, which illustrates a flowchart of a method for signal transmission provided in an exemplary embodiment of the disclosure. As illustrated in FIG. 14, the operations at S810-1 as illustrated in FIG. 13 can be implemented as operations at S810-1a.

At S810-1a, the zero-power device determines one resource set from multiple resource sets as the positioning resource set.

That is, the positioning resource set is one resource set among the multiple resource set.

In embodiments of the disclosure, a resource set refers to an available total resource pool.

The zero-power device selects one resource set from the existing multiple resource sets as a positioning resource set used for determining a first resource.

In embodiments of the disclosure, a feasible solution for determining the positioning resource set is provided, where one resource set is selected from the multiple resource sets as a first resource used by the zero-power device to transmit a PRS. With such a solution, the first resource is determined based on existing resource sets, which can reduce the design workload, thereby simplifying the work process.

In some embodiments, the resource set is predefined, or the resource set is defined by a protocol, or the resource set is received by the zero-power tag device, or the resource set is pre-configured by the positioning device for the zero-power tag device.

**In** embodiments of the disclosure, the resource set may be predefined, may be defined by a protocol, may be received by the zero-power tag device, or may be pre-configured by the positioning device for the zero-power tag device.

For the sake of simplifying a structure of signaling of the zero-power tag, the resource set is usually predefined or defined by a protocol.

Exemplarily, the resource set may be predefined or defined by a protocol, or may be determined by a control node in a positioning system and then delivered to each zero-power device before positioning.

**In** embodiments of the disclosure, a feasible solution for selecting the resource set is provided, where the resource set is selected by using existing manners, which can simplify the solution design, thereby reducing standardization complexity.

**In** some embodiments, all or part of the first resource is randomly selected by the zero-power device, or all or part of the first resource is selected by the zero-power device according to part or all of ID information of the zero-power device, or all or part of the first resource is selected by the zero-power device according to signaling configuration transmitted by the positioning device.

**In** embodiments of the disclosure, the first resource may be randomly selected by the zero-power device, may be selected by the zero-power device according to part or all of the ID information of the zero-power device, may be selected by the zero-power device according to the signaling configuration transmitted by the positioning device, or may be selected by using a combination of the above manners.

Exemplarily, a specific manner of selecting the first resource includes the following.
(1) Random selection: it is necessary to first determine a time domain/frequency domain/spatial domain/code domain resource set used for a positioning signal based on pre-configuration or configuration by a network positioning/control node, and then each zero-power device selects a resource to be used from the resource set.
(2) Based on ID information of the zero-power device, a selection is made according to a specific rule.
(3) A resource to be used by a zero-power device is determined according to configuration information of a network positioning/control node.
(4) A combination of the above manners.

In embodiments of the disclosure, a feasible solution for selecting the first resource is provided, such that multiple manners can be provided for selecting the resource(s) used by the zero-power device to transmit a PRS, thereby improving the flexibility of the manner of selecting the first resource, reducing the design workload, and thus providing more space for future expansion.

Exemplarily, in a total positioning resource set, each zero-power device can only select one or more resources for backscattering a PRS, thereby avoiding significant interference among zero-power devices in a scenario with a large number of devices. The zero-power device cannot select too many resources. Otherwise, the zero-power device may need to transmit the PRS on multiple resources, resulting in high power consumption.

In embodiments of the disclosure, the following manners for selecting orthogonal resources are provided.

### (1) Random selection

Assuming that a total orthogonal resource set is all slots within a window W, i.e., the total number of orthogonal time domain resources is Ntotal=L slots, then each zero-power device will randomly select one slot from the Ntotal slots through uniform distribution as a slot resource used for transmitting a PRS.

### (2) A selection is made according to ID information of the zero-power device

a) It is assumed that an ID occupies 10 bits, a total resource set is determined according to time domain orthogonal resources, and the total number of orthogonal time domain resources is determined as Ntotal=L slots, then a slot resource indexed IDmsb_N is selected according to the first N bits of the ID information, where IDmsb_N indicates a value represented by the first N bits of the ID information.
   For example, if ID = 10011 01101, and a decimal number corresponding to the first N =5 bits, i.e., 10011, is 32+2+1=35, then IDmsb_5 = 35. Then, a slot resource indexed 35 can be selected according to the first 5 bits of the ID information.
b) It is assumed that the ID occupies 10 bits, the total resource set is determined according to time domain + frequency domain orthogonal resources, and the total number of orthogonal time-frequency resources is determined as Ntotal=2L, then a slot resource indexed *mod(ID,* Ntotal) can be selected according to the ID information.
c) It is assumed that the ID occupies 10 bits, the total resource set is determined according to time domain + code domain orthogonal resources, and L slots and Y code domain resources are determined, then the first *N*1 bits of the ID information are used for selecting the L slots, and the last *N2* bits of the ID information are used for selecting the *Y* code domain resources.

### (3) Orthogonal resources are determined according to signaling configuration

Before positioning, a network control node or a functional signal first establishes connections with zero-power devices in the environment, and allocates a dedicated positioning resource configuration to each zero-power device.
a) explicit configuration of resource information: the signaling may contain information such as a time domain slot index characteristic, a frequency domain offset value, an orthogonal sequence index, etc.
b) implicit configuration of resource information: the signaling contains a resource index N_config.

Similar to solution (1) and solution (2) mentioned above, the total resource set Ntotal can be determined through pre-configuration, and a resource indexed N_config or satisfying mod(N_config, Ntotal) is a resource indicated based on the signaling.

### (4) Part of resources are determined according to ID information

It is assumed that the ID occupies 10 bits, the total resource set is determined according to time domain + spatial domain orthogonal resources, and *L* slots and *X* spatial domain orthogonal resources are determined according to Embodiment 1, then the zero-power device can determine, according to the ID information, to select a slot resource indexed *mod(ID,* Ntotal), and determine spatial domain resources for backscattering according to a direction of an incoming wave signal.

In the technical solutions of the disclosure, a method for positioning based on active transmission of a reference signal by the zero-power device is provided, especially the method for determining and selecting resources used when the reference signal is transmitted. During positioning, a large number of zero-power devices are usually deployed in the environment, and a time domain/frequency domain/spatial domain/code domain resource(s) used by each zero-power device can be determined, thereby effectively avoiding interference caused by multiple zero-power devices transmitting respective reference signals on the same resource, and thus further improving reception measurement and positioning accuracy. A specific selection manner mainly includes the following.
1. Random selection: it is necessary to first determine time domain/frequency domain/spatial domain/code domain resource set used for a positioning signal based on pre-configuration or configuration by a network positioning/control node, and then each zero-power device selects a resource to be used from the resource set.
2. Based on ID information of the zero-power device, a selection is made according to a specific rule.
3. A resource to be used by a zero-power device is determined according to configuration information of a network positioning/control node.
4. A combination of the above manners.

In embodiments of the disclosure, in a zero-power device positioning scenario, the time domain/frequency domain/spatial domain/code domain resource(s) used by each zero-power device to actively transmit or backscatter a PRS can be determined, thereby effectively avoiding interference caused by multiple zero-power devices simultaneously transmitting signals on the same resource, and thus further improving reception measurement and positioning accuracy.

In summary, in the disclosure, in a zero-power positioning system, a position of the resource(s) occupied by the reference tag to actively transmit the PRS can be determined. The disclosure is not limited to positioning scenarios where a zero-power device serves as a reference tag, and may also be applicable in ordinary positioning scenarios by replacing a target device with a zero-power device. In this case, the zero-power device only needs to actively transmit a reference signal, and a base station or an AP handles time/angle measurement processes.

Reference may be made to FIG. 15, which illustrates a block diagram of an apparatus for signal transmission provided in an exemplary embodiment of the disclosure. The apparatus for signal transmission has a function(s) of implementing the methods performed by the zero-power device as illustrated in FIG. 6, FIG. 8, FIG. 13, or FIG. 14. As illustrated in FIG. 15, the apparatus may include an obtaining module 1501 and a transmitting module 1502. The obtaining module 1501 is configured to obtain a first resource. The transmitting module 1502 is configured to transmit a PRS through active transmission according to the first resource, where the PRS is used by a positioning device that receives the PRS to perform positioning-related measurement and obtain corresponding information.

In some embodiments, a transmission power for the PRS is a fixed power, or the transmission power for the PRS is associated with the zero-power device.

In some embodiments, the apparatus further includes a first reporting module. The first reporting module is configured to report the transmission power for the PRS to the positioning device.

In some embodiments, the apparatus further includes a second reporting module. The second reporting module is configured to report a transmission manner for the PRS to the positioning device.

In some embodiments, the first resource has a specific time domain characteristic, or the first resource has a specific frequency domain characteristic, or the first resource has a specific spatial domain characteristic, or the first resource has a specific code domain characteristic.

In some embodiments, the first resource is part or all of time domain resources within a time window, and/or the first resource is a time domain resource that satisfies a first preset rule within a time window.

In some embodiments, the time window is a time domain resource repeated with a period of *T* in time domain, or the time window is *L* consecutive time units after a trigger signal is received by the zero-power device, where L is a positive integer.

In some embodiments, the first preset rule is associated with an index of a time unit.

In some embodiments, the time unit is one of: a slot, a symbol, a subframe, or a frame.

In some embodiments, the first resource is at least one frequency domain resource or at least one frequency domain resource combination, or the first resource is a frequency domain resource that has at least one frequency offset relative to a frequency of a trigger signal, or the first resource is a frequency domain resource that satisfies a second preset rule.

In some embodiments, each of the at least one frequency domain resource combination contains at least two frequencies, or each of the at least one frequency domain resource combination contains at least two subcarriers, or each of the at least one frequency domain resource combination contains at least two carriers, or each of the at least one frequency domain resource combination contains at least two subbands, or each of the at least one frequency domain resource combination contains at least two bands.

In some embodiments, the second preset rule is associated with an index of a frequency unit, or the second preset rule is associated with a frequency domain offset relative to a target frequency unit of a trigger signal.

In some embodiments, the frequency unit is one of: a frequency, a subcarrier, a carrier, a subband, or a band.

In some embodiments, the first resource is at least one direction or at least one direction combination, and each of the at least one direction combination contains at least two azimuth angles, or the first resource is a direction that has at least one angle offset relative to a direction of a trigger signal, or the first resource is a direction that is QCL with the direction of the trigger signal.

In some embodiments, the first resource is at least one sequence or at least one sequence combination, where each of the at least one sequence combination contains at least two sequences, and the at least two sequences are orthogonal or quasi-orthogonal.

In some embodiments, the obtaining module 1501 is configured to obtain resource information, and obtain the first resource according to the resource information.

In some embodiments, the resource information is obtained by the zero-power device through random selection, and/or the resource information is obtained by the zero-power device according to part or all of ID information of the zero-power device, and/or the resource information is obtained by the zero-power device according to signaling configuration transmitted by the positioning device.

In some embodiments, the resource information includes at least one of: time domain resource information, frequency domain resource information, spatial domain resource information, or code domain resource information.

In some embodiments, the obtaining module 1501 is configured to determine a positioning resource set, where the positioning resource set contains one or more second resources, and determine the first resource from the positioning resource set.

In some embodiments, the second resource has a specific time domain characteristic, or the second resource has a specific frequency domain characteristic, or the second resource has a specific spatial domain characteristic, or the second resource has a specific code domain characteristic.

In some embodiments, the second resource is part or all of time domain resources within a time window, and/or the second resource is a time domain resource that satisfies a third preset rule within a time window.

In some embodiments, the time window is a time domain resource repeated with a period of *T* in time domain, or the time window is *L* consecutive time units after a trigger signal is received by the zero-power device, where L is a positive integer.

In some embodiments, the third preset rule is associated with an index of a time unit.

In some embodiments, the time unit is one of: a slot, a symbol, a subframe, or a frame.

In some embodiments, the second resource is at least one frequency domain resource combination, or the second resource is a frequency domain resource that has at least one frequency offset relative to a frequency of a trigger signal, or the second resource is a frequency domain resource that satisfies a fourth preset rule.

In some embodiments, each of the at least one frequency domain resource combination contains at least two frequencies, or each of the at least one frequency domain resource combination contains at least two subcarriers, or each of the at least one frequency domain resource combination contains at least two carriers, or each of the at least one frequency domain resource combination contains at least two subbands, or each of the at least one frequency domain resource combination contains at least two bands.

In some embodiments, the fourth preset rule is associated with an index of a frequency unit, or the fourth preset rule is associated with a frequency domain offset relative to a target frequency unit of a trigger signal.

In some embodiments, the frequency unit is one of: a frequency, a subcarrier, a carrier, a subband, or a band.

In some embodiments, the second resource is one or more direction combinations, and each of the one or more direction combinations is formed by at least two azimuth angles, or the second resource is a direction that has at least one angle offset relative to a direction of a trigger signal, or the second resource is a direction that is QCL with the direction of the trigger signal.

In some embodiments, the second resource is one or more sequence combinations, and each of the one or more sequence combinations is formed by at least two sequences, where the at least two sequences are orthogonal or quasi-orthogonal.

In some embodiments, all or part of the positioning resource set is randomly selected by the zero-power device, or all or part of the positioning resource set is selected by the zero-power device according to part or all of ID information of the zero-power device, or all or part of the positioning resource set is selected by the zero-power device according to signaling configuration transmitted by the positioning device.

In some embodiments, the obtaining module 1501 is configured to determine one resource set from multiple resource sets as the positioning resource set.

In some embodiments, the resource set is predefined, or the resource set is defined by a protocol, or the resource set is received by a zero-power tag device, or the resource set is pre-configured by the positioning device for the zero-power tag device.

In some embodiments, all or part of the first resource is randomly selected by the zero-power device, or all or part of the first resource is selected by the zero-power device according to part or all of ID information of the zero-power device, or all or part of the first resource is selected by the zero-power device according to signaling configuration transmitted by the positioning device.

Reference may be made to FIG. 16, which illustrates a block diagram of an apparatus for signal transmission provided in an exemplary embodiment of the disclosure. The apparatus for signal transmission has a function(s) of implementing the method performed by the positioning device as illustrated in FIG. 7, FIG. 8, FIG. 13, or FIG. 14. As illustrated in FIG. 16, the apparatus may include a receiving module 1601 and a positioning module 1602. The receiving module 1601 is configured to receive a PRS, where the PRS is a signal transmitted by a zero-power device through active transmission according to a first resource. The positioning module 1602 is configured to perform positioning-related measurement and obtain corresponding information according to the PRS.

In some embodiments, a transmission power for the PRS is a fixed power, or the transmission power for the PRS is associated with the zero-power device.

In some embodiments, the transmission power for the PRS is reported by the zero-power device to the positioning device.

In some embodiments, a transmission manner for the PRS is reported by the zero-power device to the positioning device.

In some embodiments, the first resource has a specific time domain characteristic, or the first resource has a specific frequency domain characteristic, or the first resource has a specific spatial domain characteristic, or the first resource has a specific code domain characteristic.

In some embodiments, the first resource is part or all of time domain resources within a time window, and/or the first resource is a time domain resource that satisfies a first preset rule within a time window.

In some embodiments, the time window is a time domain resource repeated with a period of *T* in time domain, or the time window is *L* consecutive time units after a trigger signal is received by the zero-power device, where L is a positive integer.

In some embodiments, the first preset rule is associated with an index of a time unit.

In some embodiments, the time unit is one of: a slot, a symbol, a subframe, or a frame.

In some embodiments, the first resource is at least one frequency domain resource or at least one frequency domain resource combination, or the first resource is a frequency domain resource that has at least one frequency offset relative to a frequency of a trigger signal, or the first resource is a frequency domain resource that satisfies a second preset rule.

In some embodiments, the frequency domain resource combination contains at least two frequencies, or the frequency domain resource combination contains at least two subcarriers, or the frequency domain resource combination contains at least two carriers, or the frequency domain resource combination contains at least two subbands, or the frequency domain resource combination contains at least two bands.

In some embodiments, the second preset rule is associated with an index of a frequency unit, or the second preset rule is associated with a frequency domain offset relative to a target frequency unit of a trigger signal.

In some embodiments, the frequency unit is one of: a frequency, a subcarrier, a carrier, a subband, or a band.

In some embodiments, the first resource is at least one direction or at least one direction combination, and each of the at least one direction combination contains at least two azimuth angles, or the first resource is a direction that has at least one angle offset relative to a direction of a trigger signal, or the first resource is a direction that is QCL with the direction of the trigger signal.

In some embodiments, the first resource is at least one sequence or at least one sequence combination, where each of the at least one sequence combination contains at least two sequences, and the at least two sequences are orthogonal or quasi-orthogonal.

In some embodiments, the first resource is determined according to resource information.

In some embodiments, the resource information is obtained by the zero-power device through random selection, and/or the resource information is obtained by the zero-power device according to part or all of ID information of the zero-power device, and/or the resource information is obtained by the zero-power device according to signaling configuration transmitted by the positioning device.

In some embodiments, the resource information includes at least one of: time domain resource information, frequency domain resource information, spatial domain resource information, or code domain resource information.

In some embodiments, the first resource is determined according to a positioning resource set, and the positioning resource set contains one or more second resources.

In some embodiments, the second resource has a specific time domain characteristic, or the second resource has a specific frequency domain characteristic, or the second resource has a specific spatial domain characteristic, or the second resource has a specific code domain characteristic.

In some embodiments, the second resource is part or all of time domain resources within a time window, and/or the second resource is a time domain resource that satisfies a third preset rule within a time window.

In some embodiments, the time window is a time domain resource repeated with a period of *T* in time domain, or the time window is *L* consecutive time units after a trigger signal is received by the zero-power device, where L is a positive integer.

In some embodiments, the third preset rule is associated with an index of a time unit.

In some embodiments, the time unit is one of: a slot, a symbol, a subframe, or a frame.

In some embodiments, the second resource is at least one frequency domain resource combination, or the second resource is a frequency domain resource that has at least one frequency offset relative to a frequency of a trigger signal, or the second resource is a frequency domain resource that satisfies a fourth preset rule.

In some embodiments, the frequency domain resource combination contains at least two frequencies, or the frequency domain resource combination contains at least two subcarriers, or the frequency domain resource combination contains at least two carriers, or the frequency domain resource combination contains at least two subbands, or the frequency domain resource combination contains at least two bands.

In some embodiments, the fourth preset rule is associated with an index of a frequency unit, or the fourth preset rule is associated with a frequency domain offset relative to a target frequency unit of a trigger signal.

In some embodiments, the frequency unit is one of: a frequency, a subcarrier, a carrier, a subband, or a band.

In some embodiments, the second resource is one or more direction combinations, and each of the one or more direction combinations is formed by at least two azimuth angles, or the second resource is a direction that has at least one angle offset relative to a direction of a trigger signal, or the second resource is a direction that is QCL with the direction of the trigger signal.

In some embodiments, the second resource is one or more sequence combinations, and each of the one or more sequence combinations is formed by at least two sequences, where the at least two sequences are orthogonal or quasi-orthogonal.

In some embodiments, all or part of the positioning resource set is randomly selected by the zero-power device, or all or part of the positioning resource set is selected by the zero-power device according to part or all of ID information of the zero-power device, or all or part of the positioning resource set is selected by the zero-power device according to signaling configuration transmitted by the positioning device.

In some embodiments, the positioning resource set is one resource set among multiple resource sets.

In some embodiments, the resource set is predefined, or the resource set is defined by a protocol, or the resource set is received by a zero-power tag device, or the resource set is pre-configured by the positioning device for the zero-power tag device.

In some embodiments, all or part of the first resource is randomly selected by the zero-power device, or all or part of the first resource is selected by the zero-power device according to part or all of ID information of the zero-power device, or all or part of the first resource is selected by the zero-power device according to signaling configuration transmitted by the positioning device.

It can be noted that, when the apparatus provided in the foregoing embodiments implements its functions, only the division into the above functional modules is taken an example for illustration. In practice, the above functions can be allocated to different functional modules according to actual needs, that is, the structure of the device is divided into different functional modules to complete all or some of the functions described above.

Regarding the apparatus in the foregoing embodiments, the manner in which each module performs operations has been described in detail in the related method embodiments and thus will not be elaborated again herein.

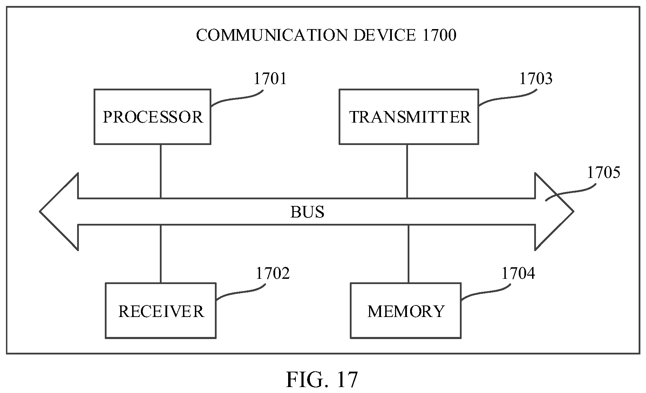

Reference may be made to FIG. 17, which illustrates a schematic structural diagram of a communication device 1700 provided in an exemplary embodiment of the disclosure. The communication device 1700 may include a processor 1701, a receiver 1702, a transmitter 1703, a memory 1704, and a bus 1705.

The processor 1701 includes one or more processing cores, and the processor 1701 executes various function applications and information processing by running software programs and modules. The receiver 1702 and the transmitter 1703 may be implemented as a communication assembly, and the communication assembly may be a communication chip. The communication chip may also be referred to as a transceiver. The memory 1704 is connected to the processor 1701 via the bus 1705. The memory 1704 may be configured to store a computer program. The processor 1701 is configured to execute the computer program, so as to implement various steps in the foregoing method embodiments.

In addition, the memory 1704 may be implemented by any type of volatile storage device or non-volatile storage device or a combination thereof. The volatile storage device or non-volatile storage device includes, but is not limited to, a magnetic disk or an optical disk, an electrically erasable programmable read-only memory, an erasable programmable read-only memory, a static random-access memory, a read-only memory, a magnetic memory, a flash memory, and a programmable read-only memory.

In an exemplary solution, when the communication device 1700 is implemented as the positioning device, the receiver 1702 and the processor 1701 execute the computer program, to cause the communication device to implement various steps performed by the positioning device in the methods as illustrated in FIG. 7, FIG. 8, FIG. 13, or FIG. 14.

In an exemplary solution, when the communication device 1700 is implemented as the zero-power tag device, the transmitter 1703 executes the computer program, to cause the communication device to implement various steps performed by the zero-power device in the methods as illustrated in FIG. 6, FIG. 8, FIG. 13, or FIG. 14.

A computer-readable storage medium is further provided in embodiments of the disclosure. The computer-readable storage medium is configured to store a computer program that is loaded and executed by a processor, to implement all or part of the steps performed by the positioning device or the zero-power device in the methods as illustrated in FIG. 6, FIG. 7, FIG. 8, FIG. 13, or FIG. 14.

A chip is further provided in the disclosure. The chip is configured to execute in a communication device, to cause the communication device to implement all or part of the steps performed by the positioning device or the zero-power device in the methods as illustrated in FIG. 6, FIG. 7, FIG. 8, FIG. 13, or FIG. 14.

A computer program product is further provided in the disclosure. The computer program product or computer program includes computer instructions stored in a computer-readable storage medium. A processor of a communication device is configured to read the computer instructions from the computer-readable storage medium and execute the computer instructions, to cause the communication device to implement all or part of the steps performed by the positioning device or the zero-power device in the methods as illustrated in FIG. 6, FIG. 7, FIG. 8, FIG. 13, or FIG. 14.

A computer program is further provided in the disclosure. The computer program is executed by a processor of a communication device, to cause the communication device to implement all or part of the steps performed by the positioning device or the zero-power device in the methods as illustrated in FIG. 6, FIG. 7, FIG. 8, FIG. 13, or FIG. 14.

## Claims

1. A method for signal transmission, performed by a zero-power device and comprising:
obtaining a first resource; and
transmitting a positioning reference signal (PRS) through active transmission according to the first resource, wherein the PRS is used by a positioning device that receives the PRS to perform positioning-related measurement and obtain corresponding information.

2. The method of claim 1, wherein a transmission power for the PRS is a fixed power; or the transmission power for the PRS is associated with the zero-power device.

3. The method of claim 1, further comprising:
reporting a transmission power for the PRS to the positioning device.

4. The method of claim 1, further comprising:
reporting a transmission manner for the PRS to the positioning device.

5. The method of any one of claims 1 to 4, wherein the first resource has a specific time domain characteristic; or the first resource has a specific frequency domain characteristic; or the first resource has a specific spatial domain characteristic; or the first resource has a specific code domain characteristic.

6. The method of any one of claims 1 to 5, wherein the first resource is part or all of time domain resources within a time window; and/or the first resource is a time domain resource that satisfies a first preset rule within a time window.

7. The method of claim 6, wherein the time window is a time domain resource repeated with a period of *T* in time domain; or the time window is *L* consecutive time units after a trigger signal is received by the zero-power device, wherein L is a positive integer.

8. The method of claim 6 or 7, wherein the first preset rule is associated with an index of a time unit.

9. The method of claim 8, wherein the time unit is one of: a slot, a symbol, a subframe, or a frame.

10. The method of any one of claims 1 to 9, wherein the first resource is at least one frequency domain resource or at least one frequency domain resource combination; or the first resource is a frequency domain resource that has at least one frequency offset relative to a frequency of a trigger signal; or the first resource is a frequency domain resource that satisfies a second preset rule.

11. The method of claim 10, wherein each of the at least one frequency domain resource combination contains at least two frequencies; or each of the at least one frequency domain resource combination contains at least two subcarriers; or each of the at least one frequency domain resource combination contains at least two carriers; or each of the at least one frequency domain resource combination contains at least two subbands; or each of the at least one frequency domain resource combination contains at least two bands.

12. The method of claim 10, wherein the second preset rule is associated with an index of a frequency unit; or the second preset rule is associated with a frequency domain offset relative to a target frequency unit of a trigger signal.

13. The method of claim 10, wherein the frequency unit is one of: a frequency, a subcarrier, a carrier, a subband, or a band.

14. The method of any one of claims 1 to 9, wherein the first resource is at least one direction or at least one direction combination, and each of the at least one direction combination contains at least two azimuth angles; or the first resource is a direction that has at least one angle offset relative to a direction of a trigger signal; or the first resource is a direction that is quasi-co-located (QCL) with the direction of the trigger signal.

15. The method of any one of claims 1 to 9, wherein the first resource is at least one sequence or at least one sequence combination, wherein
each of the at least one sequence combination contains at least two sequences, and the at least two sequences are orthogonal or quasi-orthogonal.

16. The method of any one of claims 1 to 15, wherein obtaining the first resource comprises:
obtaining resource information; and
obtaining the first resource according to the resource information.

17. The method of claim 16, wherein the resource information is obtained by the zero-power device through random selection; and/or the resource information is obtained by the zero-power device according to part or all of identity (ID) information of the zero-power device; and/or the resource information is obtained by the zero-power device according to signaling configuration transmitted by the positioning device.

18. The method of claim 16 or 17, wherein the resource information comprises at least one of:
time domain resource information, frequency domain resource information, spatial domain resource information, or code domain resource information.

19. The method of any one of claims 1 to 15, wherein obtaining the first resource comprises:
determining a positioning resource set, wherein the positioning resource set contains one or more second resources; and
determining the first resource from the positioning resource set.

20. The method of claim 19, wherein the second resource has a specific time domain characteristic; or the second resource has a specific frequency domain characteristic; or the second resource has a specific spatial domain characteristic; or the second resource has a specific code domain characteristic.

21. The method of claim 19 or 20, wherein the second resource is part or all of time domain resources within a time window; and/or the second resource is a time domain resource that satisfies a third preset rule within a time window.

22. The method of claim 21, wherein the time window is a time domain resource repeated with a period of *T* in time domain; or the time window is *L* consecutive time units after a trigger signal is received by the zero-power device, wherein L is a positive integer.

23. The method of claim 21 or 22, wherein the third preset rule is associated with an index of a time unit.

24. The method of claim 23, wherein the time unit is one of: a slot, a symbol, a subframe, or a frame.

25. The method of any one of claims 19 to 24, wherein the second resource is at least one frequency domain resource combination; or the second resource is a frequency domain resource that has at least one frequency offset relative to a frequency of a trigger signal; or the second resource is a frequency domain resource that satisfies a fourth preset rule.

26. The method of claim 25, wherein each of the at least one frequency domain resource combination contains at least two frequencies; or each of the at least one frequency domain resource combination contains at least two subcarriers; or each of the at least one frequency domain resource combination contains at least two carriers; or each of the at least one frequency domain resource combination contains at least two subbands; or each of the at least one frequency domain resource combination contains at least two bands.

27. The method of claim 25, wherein the fourth preset rule is associated with an index of a frequency unit; or the fourth preset rule is associated with a frequency domain offset relative to a target frequency unit of a trigger signal.

28. The method of claim 27, wherein the frequency unit is one of: a frequency, a subcarrier, a carrier, a subband, or a band.

29. The method of any one of claims 19 to 24, wherein the second resource is one or more direction combinations, and each of the one or more direction combinations is formed by at least two azimuth angles; or the second resource is a direction that has at least one angle offset relative to a direction of a trigger signal; or the second resource is a direction that is QCL with the direction of the trigger signal.

30. The method of any one of claims 19 to 24, wherein the second resource is one or more sequence combinations, and each of the one or more sequence combinations is formed by at least two sequences, wherein
the at least two sequences are orthogonal or quasi-orthogonal.

31. The method of any one of claims 19 to 30, wherein all or part of the positioning resource set is randomly selected by the zero-power device; or all or part of the positioning resource set is selected by the zero-power device according to part or all of ID information of the zero-power device; or all or part of the positioning resource set is selected by the zero-power device according to signaling configuration transmitted by the positioning device.

32. The method of claim 19, wherein determining the positioning resource set comprises:
determining one resource set from a plurality of resource sets as the positioning resource set.

33. The method of claim 32, wherein the resource set is predefined; or the resource set is defined by a protocol; or the resource set is received by a zero-power tag device; or the resource set is pre-configured by the positioning device for the zero-power tag device.

34. The method of any one of claims 1 to 33, wherein all or part of the first resource is randomly selected by the zero-power device; or all or part of the first resource is selected by the zero-power device according to part or all of ID information of the zero-power device; or all or part of the first resource is selected by the zero-power device according to signaling configuration transmitted by the positioning device.

35. A method for signal transmission, performed by a positioning device and comprising:
receiving a positioning reference signal (PRS), wherein the PRS is a signal transmitted by a zero-power device through active transmission according to a first resource; and
performing positioning-related measurement and obtaining corresponding information according to the PRS.

36. The method of claim 35, wherein a transmission power for the PRS is a fixed power; or the transmission power for the PRS is associated with the zero-power device.

37. The method of claim 35, wherein a transmission power for the PRS is reported by the zero-power device to the positioning device.

38. The method of claim 35, wherein a transmission manner for the PRS is reported by the zero-power device to the positioning device.

39. The method of any one of claims 35 to 38, wherein the first resource has a specific time domain characteristic; or the first resource has a specific frequency domain characteristic; or the first resource has a specific spatial domain characteristic; or the first resource has a specific code domain characteristic.

40. The method of any one of claims 35 to 39, wherein the first resource is part or all of time domain resources within a time window; and/or the first resource is a time domain resource that satisfies a first preset rule within a time window.

41. The method of claim 40, wherein the time window is a time domain resource repeated with a period of *T* in time domain; or the time window is *L* consecutive time units after a trigger signal is received by the zero-power device, wherein L is a positive integer.

42. The method of claim 40 or 41, wherein the first preset rule is associated with an index of a time unit.

43. The method of claim 42, wherein the time unit is one of: a slot, a symbol, a subframe, or a frame.

44. The method of any one of claims 35 to 43, wherein the first resource is at least one frequency domain resource or at least one frequency domain resource combination; or the first resource is a frequency domain resource that has at least one frequency offset relative to a frequency of a trigger signal; or the first resource is a frequency domain resource that satisfies a second preset rule.

45. The method of claim 44, wherein the frequency domain resource combination contains at least two frequencies; or the frequency domain resource combination contains at least two subcarriers; or the frequency domain resource combination contains at least two carriers; or the frequency domain resource combination contains at least two subbands; or the frequency domain resource combination contains at least two bands.

46. The method of claim 44, wherein the second preset rule is associated with an index of a frequency unit; or the second preset rule is associated with a frequency domain offset relative to a target frequency unit of a trigger signal.

47. The method of claim 44, wherein the frequency unit is one of: a frequency, a subcarrier, a carrier, a subband, or a band.

48. The method of any one of claims 35 to 43, wherein the first resource is at least one direction or at least one direction combination, and each of the at least one direction combination contains at least two azimuth angles; or the first resource is a direction that has at least one angle offset relative to a direction of a trigger signal; or the first resource is a direction that is quasi-co-located (QCL) with the direction of the trigger signal.

49. The method of any one of claims 35 to 43, wherein the first resource is at least one sequence or at least one sequence combination, wherein
each of the at least one sequence combination contains at least two sequences, and the at least two sequences are orthogonal or quasi-orthogonal.

50. The method of any one of claims 1 to 49, wherein the first resource is determined according to resource information.

51. The method of claim 50, wherein the resource information is obtained by the zero-power device through random selection; and/or the resource information is obtained by the zero-power device according to part or all of identity (ID) information of the zero-power device; and/or the resource information is obtained by the zero-power device according to signaling configuration transmitted by the positioning device.

52. The method of claim 50 or 51, wherein the resource information comprises at least one of:
time domain resource information, frequency domain resource information, spatial domain resource information, or code domain resource information.

53. The method of any one of claims 35 to 49, wherein the first resource is determined according to a positioning resource set, and the positioning resource set contains one or more second resources.

54. The method of claim 53, wherein the second resource has a specific time domain characteristic; or the second resource has a specific frequency domain characteristic; or the second resource has a specific spatial domain characteristic; or the second resource has a specific code domain characteristic.

55. The method of claim 53 or 54, wherein the second resource is part or all of time domain resources within a time window; and/or the second resource is a time domain resource that satisfies a third preset rule within a time window.

56. The method of claim 55, wherein the time window is a time domain resource repeated with a period of *T* in time domain; or the time window is *L* consecutive time units after a trigger signal is received by the zero-power device, wherein L is a positive integer.

57. The method of claim 55 or 56, wherein the third preset rule is associated with an index of a time unit.

58. The method of claim 57, wherein the time unit is one of: a slot, a symbol, a subframe, or a frame.

59. The method of any one of claims 53 to 58, wherein the second resource is at least one frequency domain resource combination; or the second resource is a frequency domain resource that has at least one frequency offset relative to a frequency of a trigger signal; or the second resource is a frequency domain resource that satisfies a fourth preset rule.

60. The method of claim 59, wherein the frequency domain resource combination contains at least two frequencies; or the frequency domain resource combination contains at least two subcarriers; or the frequency domain resource combination contains at least two carriers; or the frequency domain resource combination contains at least two subbands; or the frequency domain resource combination contains at least two bands.

61. The method of claim 59, wherein the fourth preset rule is associated with an index of a frequency unit; or the fourth preset rule is associated with a frequency domain offset relative to a target frequency unit of a trigger signal.

62. The method of claim 61, wherein the frequency unit is one of: a frequency, a subcarrier, a carrier, a subband, or a band.

63. The method of any one of claims 53 to 58, wherein the second resource is one or more direction combinations, and each of the one or more direction combinations is formed by at least two azimuth angles; or the second resource is a direction that has at least one angle offset relative to a direction of a trigger signal; or the second resource is a direction that is QCL with the direction of the trigger signal.

64. The method of any one of claims 53 to 58, wherein the second resource is one or more sequence combinations, and each of the one or more sequence combinations is formed by at least two sequences, wherein
the at least two sequences are orthogonal or quasi-orthogonal.

65. The method of any one of claims 53 to 64, wherein all or part of the positioning resource set is randomly selected by the zero-power device; or all or part of the positioning resource set is selected by the zero-power device according to part or all of ID information of the zero-power device; or all or part of the positioning resource set is selected by the zero-power device according to signaling configuration transmitted by the positioning device.

66. The method of claim 53, wherein the positioning resource set is one resource set among a plurality of resource sets.

67. The method of claim 66, wherein the resource set is predefined; or the resource set is defined by a protocol; or the resource set is received by a zero-power tag device; or the resource set is pre-configured by the positioning device for the zero-power tag device.

68. The method of any one of claims 35 to 67, wherein all or part of the first resource is randomly selected by the zero-power device; or all or part of the first resource is selected by the zero-power device according to part or all of ID information of the zero-power device; or all or part of the first resource is selected by the zero-power device according to signaling configuration transmitted by the positioning device.

69. An apparatus for signal transmission, comprising:
an obtaining module configured to obtain a first resource; and
a transmitting module configured to transmit a positioning reference signal (PRS) through active transmission according to the first resource, wherein the PRS is used by a positioning device that receives the PRS to perform positioning-related measurement and obtain corresponding information.

70. An apparatus for signal transmission, comprising:
a receiving module configured to receive a positioning reference signal (PRS), wherein the PRS is a signal transmitted by a zero-power device through active transmission according to a first resource; and
a positioning module configured to perform positioning-related measurement and obtain corresponding information according to the PRS.

71. A zero-power tag device, comprising:
a transceiver;
a memory configured to store a computer program; and
a processor configured to execute the computer program, to cause the zero-power tag device to implement the method for signal transmission of any one of claims 1 to 34.

72. A positioning device, comprising:
a transceiver;
a memory configured to store a computer program; and
a processor configured to execute the computer program, to cause the positioning device to implement the method for signal transmission of any one of claims 35 to 68.

73. A computer-readable storage medium configured to store a computer program that is executed by a processor of a communication device, to cause the communication device to implement the method for signal transmission of any one of claims 1 to 68.

74. A chip, comprising an integrated circuit and an application program, wherein the chip is configured to execute in a communication device, to cause the communication device to perform the method for signal transmission of any one of claims 1 to 68.

75. A computer program product comprising computer instructions stored in a computer-readable storage medium, and a processor of a communication device being configured to read the computer instructions from the computer-readable storage medium and execute the computer instructions, to cause the communication device to perform the method for signal transmission of any one of claims 1 to 68.

76. A computer program being executed by a processor of a communication device, to cause the communication device to implement the method for signal transmission of any one of claims 1 to 68.
